# EUROPÄISCHE PATENTSCHRIFT

(11) **EP 3 464 392 B1**
(45) Veröffentlichungstag und Bekanntmachung des Hinweises auf die Patenterteilung: **18.12.2019**
(21) Anmeldenummer: 17727143.4
(22) Anmeldetag: 22.05.2017
(51) Int. Cl.: C08F 8/06, C08F 2/26, C08F 220/34

(54) **VERFAHREN ZUR HERSTELLUNG EINES ELEKTRODENMATERIALS**
METHOD FOR PRODUCING AN ELECTRODE MATERIAL
PROCÉDÉ DE FABRICATION D'UN MATÉRIAU D'ÉLECTRODE

(30) Priorität: 02.06.2016 EP 16172593
(43) Veröffentlichungstag der Anmeldung: 10.04.2019
(73) Patentinhaber: Evonik Operations GmbH, 45128 Essen (DE)
(72) Erfinder: MEIER, Christian, 64295 Darmstadt (DE); MIESS, Christine, 63743 Aschaffenburg (DE); KORELL, Michael, 44805 Bochum (DE); KUMMER, Malin, 47626 Kevelaer (DE); SCHMITT, Günter, 64291 Darmstadt (DE)
(74) Vertreter: Evonik Patent Association
(86) Internationale Anmeldenummer: PCT/EP2017/062285
(87) Internationale Veröffentlichungsnummer: WO 2017/207325

(56) Entgegenhaltungen:
- EP-A1- 1 752 474
- WO-A1-2015/032951

## Beschreibung

Die vorliegende Erfindung betrifft ein Verfahren zur Polymerisierung, wobei die Monomere als feste Partikel in einer wässrigen Phase eingesetzt werden. Die damit erhaltenen Polymere können weiter zu Polymeren, die als elektrische Ladungsspeicher, insbesondere Sekundärbatterien, verwendet werden können, oxidiert werden.

### Hintergrund der Erfindung

Organische Batterien sind elektrochemische Zellen, die ein organisches Ladungsspeicherungsmaterial als aktives Elektrodenmaterial zur Speicherung von elektrischer Ladung verwenden. Diese Sekundärbatterien zeichnen sich durch ihre besonderen Eigenschaften, wie Schnellladefähigkeit, hohe Lebensdauer, geringes Gewicht, hohe Flexibilität und einfache Verarbeitbarkeit aus. Als aktive Elektrodenmaterialien zur Ladungsspeicherung sind im Stand der Technik verschiedene polymere Strukturen beschrieben worden, so zum Beispiel polymere Verbindungen mit organischen Nitroxidradikalen als aktiven Einheiten (beispielsweise in WO 2012/133202 A1, WO 2012/133204 A1, WO 2012/120929 A1, WO 2012/153866 A1, WO 2012/153865 A1, JP 2012-221574 A, JP 2012-221575 A, JP 2012-219109 A, JP 2012-079639 A, WO 2012/029556 A1, WO 2012/153865 A1, JP 2011-252106 A, JP 2011-074317 A, JP 2011-165433 A, WO 2011034117 A1, WO 2010/140512 A1, WO 2010/104002 A1, JP 2010-238403 A, JP 2010-163551 A, JP 2010-114042 A, WO 2010/002002 A1, WO 2009/038125 A1, JP 2009-298873 A, WO 2004/077593 A1, WO 2009/145225 A1, JP 2009-238612 A, JP 2009-230951 A, JP 2009-205918 A, JP 2008-234909 A, JP 2008-218326 A, WO 2008/099557 A1, WO 2007/141913 A1, US 2002/0041995 A1, EP 1128453 A2; A. Vlad, J. Rolland, G. Hauffman, B. Ernould, J.-F. Gohy, ChemSusChem 2015, 8, 1692 - 1696) oder polymere Verbindungen mit organischen Phenoxylradikalen oder Galvinoxylradikalen als aktiven Einheiten (zum Beispiel US 2002/0041995 A1, JP 2002-117852 A).

Besonders hervorzuheben ist dabei Poly(2,2,6,6-Tetramethylpiperidinyloxymethacrylat), dessen Synthese von K. Nakahara, S. Iwasa, M. Satoh, Y. Morioka, J. Iriyama, M. Suguro, E. Hasegawa, Chem Phys Lett 2002, 359, 351 - 354 und J. Kim, G. Cheruvally, J. Choi, J. Ahn, S. Lee, S. Choi, C. Song, Solid State lonics 2007, 178, 1546 - 1551 beschrieben ist. Weitere Synthesemethoden sind in den folgenden Druckschriften beschrieben: WO 2015/032951 A1, EP 1 752 474 A1, EP 1 911 775 A1, EP 2 042 523 A1. Dabei ist vor allem die EP 1 752 474 A1 hervorzuheben, welche ein Verfahren zur Polymerisierung von 2,2,6,6-Tetramethylpiperidinyloxymethacrylat als "Emulsionspolymerisierung", das heißt in Form homogener Mischungen der Monomere in Wasser, beschreibt. Das in diesem Dokument beschriebene Verfahren weist jedoch einige Nachteile auf. Es wurde nämlich beobachtet, dass gerade bei größeren Ansätzen wie sie im Industriemaßstab nötig sind, die nach dem in diesem Dokument beschriebenen Verfahren erhaltenen Polymere nur schlecht aufzuarbeiten sind. Gerade bei der Herstellung organischen Ladungsspeichermaterials sollte dieses jedoch idealerweise in fein verteilter Form zur Verfügung stehen. Mit den im Stand der Technik beschriebenen Verfahren werden die Polymere jedoch als Koagulat erhalten, was einen zusätzlichen Verkleinerungsschritt nötig macht. Es ist deshalb wünschenswert, gerade bei großtechnischer Produktion, sich diesen Verkleinerungsschritt zu ersparen und schon direkt nach dem Polymerisierungsschritt fein verteiltes, leicht aufzuarbeitendes Polymer zu erhalten.

Die Aufgabe der vorliegenden Erfindung war es deshalb, ein verbessertes Verfahren zur Herstellung von in Sekundärbatterien einsetzbaren organischen Polymeren zur Verfügung zu stellen, welches sich insbesondere dadurch auszeichnet, dass die erhaltenen Polymere leichter aufzuarbeiten sind.

Es wurde nun überraschenderweise ein Verfahren gefunden, welches die vorgenannte Aufgabe löst.

### Detaillierte Beschreibung der Erfindung

Die vorliegende Erfindung betrifft demnach ein Verfahren zur Polymerisierung einer Verbindung der Strukturformel **(I)** mit 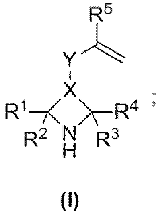
wobei R¹, R², R³, R⁴, R⁵ ausgewählt sind aus der Gruppe bestehend aus Wasserstoff, verzweigte oder unverzweigte Alkylgruppe mit 1 bis 4 Kohlenstoffatomen, bevorzugt R¹, R², R³, R⁴ alle Methyl und R⁵ = Wasserstoff oder Methyl, bevorzugter R⁵ = Methyl,
X ausgewählt ist aus der Gruppe bestehend aus *-CH₂-**C**'H-CH₂-**,*-**C**'H-CH₂-**, *-**C**'=CH-**,
   wobei "*" jeweils die Bindung zu dem mit R¹ und R² verknüpften Kohlenstoffatom bezeichnet,
   wobei "**" jeweils die Bindung zu dem mit R³ und R⁴ verknüpften Kohlenstoffatom bezeichnet,
   wobei "**C**'" ein Kohlenstoffatom bezeichnet, dass zusätzlich mit dem Rest Y verknüpft ist,
wobei Y ausgewählt aus den verbrückenden Resten **(II)** und **(III)** ist,
   wobei **(II)** die Struktur &-(Y¹)ₚ₁-[C=X¹]ₚ₂-(Y²)ₚ₃-B-(Y³)ₚ₆-[C=X²]ₚ₅-(Y⁴)ₚ₄-&& aufweist,
   und wobei **(III)** die Struktur &-(Y⁵)ₚ₉-(C=X³)ₚ₈ -(Y⁶)ₚ₇-&& aufweist,
      wobei in den verbrückenden Resten **(II)** und **(III)**
      p1, p2, p3 jeweils 0 oder 1 mit der Maßgabe, dass nicht gleichzeitig p1 = p3 = 1 und p2 = 0 ist, sind,
      p4, p5, p6 jeweils 0 oder 1 mit der Maßgabe, dass nicht gleichzeitig p4 = p6 = 1 und p5 = 0 ist, sind,
      p7, p8, p9 jeweils 0 oder 1 mit der Maßgabe, dass nicht gleichzeitig p7 = p9 = 1 und p8 = 0 ist, sind,
      X¹, X², X³ unabhängig voneinander ausgewählt aus der Gruppe bestehend aus Sauerstoff, Schwefel sind,
      Y¹, Y², Y³, Y⁴, Y⁵, Y⁶ unabhängig voneinander ausgewählt aus der Gruppe bestehend aus O, S, NH, N-Alkyl sind,
      B ein zweiwertiger (hetero)aromatischer Rest oder ein zweiwertiger, gegebenenfalls mit mindestens einer Gruppe ausgewählt aus Nitrogruppe, -NH₂, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest ist,
      und wobei "&&" für Y die Bindung bezeichnet, über die Y mit X verknüpft ist und wobei "&" für Y die Bindung bezeichnet, über die Y mit dem Kohlenstoffatom, welches mit R⁵ verknüpft ist, verknüpft ist,
umfassend die aufeinander folgenden Schritte
   (a) Erzeugen einer Dispersion **D** fester Partikel der Verbindung der Strukturformel **(I)** in einer wässrigen Phase,
   (b) Polymerisierung der festen Partikel der Verbindung der Strukturformel **(I)** der in Schritt (a) erzeugten Dispersion **D,** wodurch ein Polymer **P¹** umfassend Wiederholungseinheiten der Strukturformel **(VI)** mit 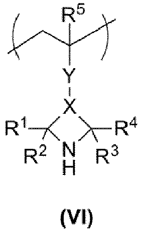 erhalten wird,
dadurch gekennzeichnet,
dass die Polymerisierung in Schritt b) bei einer Temperatur, die unterhalb der Schmelztemperatur der eingesetzten Verbindung der Strukturformel **(I)** liegt, durchgeführt wird.

Die Anzahl der Wiederholungseinheiten **(VI)** im Polymer **P¹** beträgt bevorzugt 4 bis 1 Million, bevorzugter 10 bis 100000, noch bevorzugter 20 bis 5000.

Insbesondere wird im erfindungsgemäßen Verfahren als Verbindung der Strukturformel **(I)** eine der folgenden Verbindungen der Strukturformel **(IV), (IV)', (IV)",** bevorzugt eine Verbindung der Strukturformel **(IV),** eingesetzt: 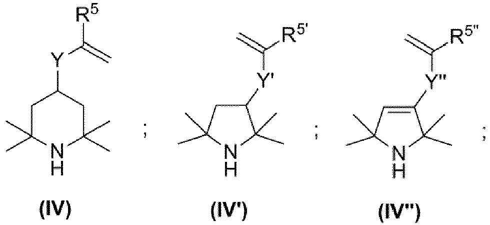
wobei in den Strukturformeln **(IV), (IV)', (IV)"** die Reste R⁵, R^{5'}, R^{5"} unabhängig voneinander jeweils Methyl oder Wasserstoff, bevorzugt Methyl sind,
und wobei in den Strukturformeln **(IV), (IV)', (IV)"** die Reste Y, Y', Y" unabhängig voneinander ausgewählt aus den verbrückenden Resten **(II)** und **(III)** mit den weiter oben angegebenen Bedeutungen sind.

Noch bevorzugter sind in den Strukturformeln **(IV), (IV)', (IV)"** die Reste Y, Y', Y" unabhängig voneinander ausgewählt aus den verbrückenden Resten **(II)** und **(III),**
wobei **(II)** die Struktur &-(Y¹)ₚ₁-[C=X¹]ₚ₂-(Y²)ₚ₃-B-(Y³)ₚ₆-[C=X²]ₚ₅-(Y⁴)ₚ₄-&& aufweist,
und wobei **(III)** die Struktur &-(Y⁵)ₚ₉-(C=X³)ₚ₈-(Y⁶)ₚ₇-&& aufweist,
wobei in den verbrückenden Resten **(II)** und **(III)**
p1, p2, p3 jeweils 0 oder 1 mit der Maßgabe, dass nicht gleichzeitig p1 = p3 = 1 und p2 = 0 ist, sind,
p4, p5, p6 jeweils 0 oder 1 mit der Maßgabe, dass nicht gleichzeitig p4 = p6 = 1 und p5 = 0 ist, sind,
p7, p8, p9 jeweils 0 oder 1 mit der Maßgabe, dass nicht gleichzeitig p7 = p9 = 1 und p8 = 0 ist, sind,
X¹, X², X³ unabhängig voneinander ausgewählt aus der Gruppe bestehend aus O, S sind,
Y¹, Y², Y³, Y⁴, Y⁵, Y⁶ unabhängig voneinander ausgewählt aus der Gruppe bestehend aus O, S, NH, N-Alkyl, wobei Alkyl bevorzugter 1 bis 6, noch bevorzugter 1 bis 4, noch mehr bevorzugter 1 bis 3, noch viel mehr bevorzugter 1 bis 2 Kohlenstoffatome aufweist, sind,
B ein zweiwertiger (hetero)aromatischer Rest, bevorzugt Phenylen, oder ein zweiwertiger, gegebenenfalls mit mindestens einer Gruppe ausgewählt aus Nitrogruppe, -NH₂, -CN, -SH, -OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe aufweisender aliphatischer Rest, ist.

Noch bevorzugter sind in den verbrückenden Resten **(II)** und **(III)**
X¹, X², X³, Y¹, Y², Y³, Y⁴, Y⁵, Y⁶ unabhängig voneinander ausgewählt aus der Gruppe bestehend aus O, S sind,
B ausgewählt aus Phenylen, gegebenenfalls mit Halogen substituierter aliphatischer Rest, der gegebenenfalls mindestens eine Gruppe ausgewählt aus Ether, Thioether, Carbonylgruppe, Carbonsäureestergruppe, Carbonsäureamidgruppe aufweist, ist; wobei B ganz besonders bevorzugt ein gegebenenfalls mit Halogen substituierter Alkylenrest ist, der insbesondere 1 bis 10, bevorzugt 1 bis 8, bevorzugter 1 bis 6, noch viel mehr bevorzugter 1 bis 4 Kohlenstoffatome aufweist und, wenn er 2 oder mehr Kohlenstoffatome aufweist, eine Ethergruppe oder Thioethergruppe aufweisen kann, ist.

Noch mehr bevorzugter wird als Verbindung der Strukturformel **(I)** eine Verbindung der Strukturformel **(IV)** eingesetzt, in der R⁵ = Methyl oder Wasserstoff, bevorzugt Methyl, ist, und Y ausgewählt aus der Gruppe bestehend aus -O-, &-O-(C=O)-&&, &-(C=O)-O-&&, verbrückender Rest **(II)** mit
der Struktur &-(O)ₚ₁-[C=O]ₚ₂-(O)ₚ₃-B-(O)ₚ₆-[C=O]ₚ₅-(O)ₚ₄-&& ist,
wobei im verbrückenden Rest **(II)**
p1, p2, p3 jeweils 0 oder 1 mit der Maßgabe, dass nicht gleichzeitig p1 = p3 = 1 und p2 = 0 ist, sind,
p4, p5, p6 jeweils 0 oder 1 mit der Maßgabe, dass nicht gleichzeitig p4 = p6 = 1 und p5 = 0 ist, sind,
wobei B ganz besonders bevorzugt ein, gegebenenfalls mit Halogen substituierter, Alkylenrest ist, der insbesondere 1 bis 10, bevorzugt 1 bis 8, bevorzugter 1 bis 6, noch viel mehr bevorzugter 1 bis 4 Kohlenstoffatome aufweist und, wenn er 2 oder mehr Kohlenstoffatome aufweist, eine Ethergruppe oder Thioethergruppe aufweisen kann, ist. Noch mehr bevorzugter ist B ein Alkylenrest mit 1 bis 10, bevorzugter 1 bis 8, bevorzugter 1 bis 6, noch viel mehr bevorzugter 1 bis 4 Kohlenstoffatomen, am bevorzugtesten ist B ausgewählt aus Methylen, Ethylen, *n*-Propylen.

In einer besonders bevorzugten Ausführungsform der vorliegenden Erfindung handelt es sich bei der Verbindung der Strukturformel **(I)** um die Struktur **(V)** mit 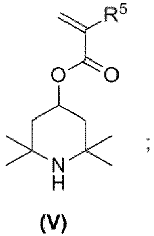 wobei R⁵ = H oder Methyl und noch bevorzugter R⁵ = Methyl ist.

Die Definition "wobei p1, p2, p3 jeweils 0 oder 1 mit der Maßgabe, dass nicht gleichzeitig p1 = p3 = 1 und p2 = 0 ist, sind" ist gleichbedeutend mit "wobei p1, p2, p3 jeweils 0 oder 1, wobei der Fall p1 = 1, p2 = 0, p3 = 1 ausgeschlossen ist, sind". Dies bedeutet, dass p1, p2, p3 erfindungsgemäß unabhängig voneinander jeweils den Wert 0 oder 1 annehmen, mit der Einschränkung, dass die Kombination ausgeschlossen ist, in der p1, p2, p3 die folgenden Werte annehmen: p1 = 1 UND p2 = 0 UND p3 = 1.

Diese Definition hat beispielsweise zur Konsequenz, dass, wenn p1 = 1 und p2 = 0, dann ist erfindungsgemäß p3 = 0.

Die Definition "wobei p4, p5, p6 jeweils 0 oder 1 mit der Maßgabe, dass nicht gleichzeitig p4 = p6 = 1 und p5 = 0 ist, sind" ist gleichbedeutend mit "wobei p4, p5, p6 jeweils 0 oder 1, wobei der Fall p4 = 1, p5 = 0, p6 = 1 ausgeschlossen ist, sind". Dies bedeutet, dass p4, p5, p6 erfindungsgemäß unabhängig voneinander jeweils den Wert 0 oder 1 annehmen, mit der Einschränkung, dass die Kombination ausgeschlossen ist, in der p4, p5, p6 die folgenden Werte annehmen: p4 = 1 UND p5 = 0 UND p6 = 1.

Diese Definition hat beispielsweise zur Konsequenz, dass, wenn p4 = 1 und p5 = 0, dann ist erfindungsgemäß p6 = 0.

Die Definition "wobei p7, p8, p9 jeweils 0 oder 1 mit der Maßgabe, dass nicht gleichzeitig p7 = p9 = 1 und p8 = 0 ist, sind" ist gleichbedeutend mit "wobei p7, p8, p9 jeweils 0 oder 1, wobei der Fall p7 = 1, p8 = 0, p9 = 1 ausgeschlossen ist, sind". Dies bedeutet, dass p7, p8, p9 erfindungsgemäß unabhängig voneinander jeweils den Wert 0 oder 1 annehmen, mit der Einschränkung, dass die Kombination ausgeschlossen ist, in der p7, p8, p9 die folgenden Werte annehmen: p7 = 1 UND p8 = 0 UND p9 = 1.

Diese Definition hat beispielsweise zur Konsequenz, dass, wenn p7 = 1 und p8 = 0, dann ist erfindungsgemäß p9 = 0.

Das erfindungsgemäße Verfahren umfasst zwei aufeinander folgende Schritte (a) und (b).

Im Schritt (a) des erfindungsgemäßen Verfahrens wird eine Dispersion **D** fester Partikel der Verbindung der Strukturformel **(I)** in einer wässrigen Phase erzeugt.

Die "Dispersion **D**" bedeutet gemäß Fachwissen und im Sinne der Erfindung eine Zusammensetzung umfassend feste Partikel [beispielsweise im Falle der Dispersion **D** Partikel der Verbindung der Strukturformel **(I)**] in einer wässrigen Phase ("wässrige Phase" impliziert dabei, dass es sich bei dieser wässrigen Phase um eine flüssige Phase handelt). Es versteht sich von selbst, dass in der erfindungsgemäßen Dispersion **D** die wässrige Phase die kontinuierliche Phase ist und die festen Partikel der Verbindung der Strukturformel **(I)** die dispergierte Phase.

"Wässrige Phase" bedeutet dabei, dass die wässrige kontinuierliche Phase Wasser umfasst, wobei insbesondere der Anteil von Wasser in der wässrigen Phase > 50.0 Gew.-%, bezogen auf das Gesamtgewicht der wässrigen Phase beträgt. Bevorzugt beträgt der Anteil von Wasser bezogen auf das Gesamtgewicht der wässrigen Phase mindestens 60.0 Gew.-%, bevorzugter mindestens 70.0 Gew.-%, noch bevorzugter mindestens 80.0 Gew.-%, noch mehr bevorzugter mindestens 90.0 Gew.-%, noch bevorzugter 92.0 Gew.-%, noch viel mehr bevorzugter mindestens 95.0 Gew.-%, noch weiter bevorzugter mindestens 99.0 Gew.-%, am bevorzugtesten mindestens 99.3 Gew.-%.

Das erfindungsgemäße Verfahren unterscheidet sich dadurch vom Stand der Technik, dass in der Dispersion **D** die Partikel der Verbindung der Strukturformel **(I)** als feste Partikel in der wässrigen Phase vorliegen. Demgegenüber wird in den vergleichbaren Verfahren des Standes der Technik bisher (etwa in den Beispielen 1 - 5 und 8 der EP 1 752 474 A1) nur die Polymerisierung in einer Mischung beschrieben, in der das Monomer im flüssigen Zustand oder gelöst in einem organischen Lösungsmittel vorliegt. Diese im Stand der Technik beschriebene Vorgehensweise bringt allerdings nicht die Vorteile mit sich, die nachfolgend beschrieben sind.

Dem Fachmann sind Methoden zur Erzeugung der Dispersion **D** geläufig, und der Schritt (a) des erfindungsgemäßen Verfahrens ist deshalb auch nicht auf eine bestimmte Methode beschränkt.

In einer bevorzugten Ausführungsform des erfindungsgemäßen Verfahrens erfolgt die Erzeugung einer Dispersion **D** fester Partikel der Verbindung der Strukturformel **(I)** in einer wässrigen Phase gemäß Schritt (a) dadurch, dass feste Partikel der Verbindung der Strukturformel **(I)** mit einer wässrigen Phase vermischt und unterhalb der Schmelztemperatur der Verbindung der Strukturformel **(I)** darin dispergiert werden. Die Dispergierung kann dabei durch dem Fachmann geläufige Verfahren zur Dispergierung erreicht werden. Solche Verfahren sind beispielsweise in der DE 10013850 A1 oder der WO 2009/016258 A1 beschrieben. Sie beruhen darauf, dass die zu dispergierende Phase starken Scherkräften (durch Rühren) ausgesetzt wird und dadurch in der kontinuierlichen Phase verteilt wird. Dem Fachmann stehen dazu kommerziell erhältliche Dispergierer zur Verfügung, etwa Dispergierer der T-Serie Ultra-Turrax (Firma: IKA-Werke GmbH und Co. KG, Model: T 25 D).

Bei der vorbeschriebenen Dispergierung der festen Partikel der Verbindung der Strukturformel **(I)** in einer wässrigen Phase werden diese schon beim Dispergiervorgang weiter zerkleinert. Gegebenenfalls können die festen Partikel der Verbindung der Strukturformel **(I)** aber auch schon zusätzlich bevor sie in der wässrigen Phase dispergiert werden, nach dem Fachmann geläufigen Verfahren durch Mahlen zerkleinert werden. Als Mühlen können dazu insbesondere eine Kugelmühle, eine Drehkugelmühle, eine Vibrationsmühle, eine Schlagmühle oder ein Pulverisierungsrührwerk eingesetzt werden. Solche Zerkleinerungsverfahren sind beispielsweise in der EP 0 373 633 A2, EP 0 231 878 A2 beschrieben.

In einer ersten alternativen bevorzugten Ausführungsform des erfindungsgemäßen Verfahrens wird die Dispersion **D** in Schritt (a) dadurch erzeugt, dass man eine Mischung der Verbindung der Strukturformel **(I)** und der wässrigen Phase bei einer Temperatur **T_{A1}** dispergiert, wobei **T_{A1}** > **T_{SMI}** ["**T_{SMI}**" = Schmelztemperatur der eingesetzten Verbindung der Strukturformel **(I)**] (es versteht sich von selbst, dass **T_{A1}** unterhalb der Siedetemperatur der wässrigen Phase und unterhalb der Sublimationstemperatur bzw. Verdampfungstemperatur der Verbindung der Strukturformel **(I)** liegt) und nach der Dispergierung die Temperatur von **T_{A1}** auf **T_{A2}**, wobei **T_{A2}** < **T_{SMI}** (es versteht sich von selbst, dass **T_{A2}** oberhalb der Schmelztemperatur der wässrigen Phase liegt), absenkt.

In einer zweiten alternativen bevorzugten Ausführungsform des erfindungsgemäßen Verfahrens wird die Dispersion **D** in Schritt (a) dadurch erzeugt, dass man eine Mischung der Verbindung der Strukturformel **(I)** und der wässrigen Phase dispergiert, wobei zur Beginn der Dispergierung **T_{A1}** > **T_{SMI}** ["**T_{SMI}**" = Schmelztemperatur der eingesetzten Verbindung der Strukturformel **(I)**] (es versteht sich von selbst, dass **T_{A1}** unterhalb der Siedetemperatur der wässrigen Phase und unterhalb der Sublimationstemperatur bzw. Verdampfungstemperatur der Verbindung der Strukturformel **(I)** liegt) eingestellt wird und man schon während der Dispergierung die Temperatur von **T_{A1}** auf **T_{A2}**, wobei **T_{A2}** < **T_{SMI}** (es versteht sich von selbst, dass **T_{A2}** oberhalb der Schmelztemperatur der wässrigen Phase liegt), absenkt.

Bei der Temperatur **T_{A1}** liegt die Verbindung der Struktur **(I)** geschmolzen vor, und es bildet sich eine Mischung der flüssigen Verbindung der Strukturformel **(I)** in der wässrigen Phase.

Durch Dispergierung bei einer Temperatur **T_{A1}** ist es dann besonders gut möglich, die Verbindung der Struktur **(I)** in der wässrigen Phase zu verteilen und feine Tröpfchen der Verbindung der Strukturformel **(I)** in der wässrigen Phase zu bilden.

Wenn es sich bei der Verbindung der Struktur **(I)** um die Struktur **(V)** handelt, wird in der gerade beschriebenen ersten alternativen bevorzugten Ausführungsform des erfindungsgemäßen Verfahrens die Dispersion **D** insbesondere dadurch erzeugt, dass man die Mischung aus der Verbindung der Strukturformel **(V)** und der wässrigen Phase bei einer Temperatur **T_{A1}** im Bereich > 61 °C und < 65 °C, bevorzugt im Bereich ≥ 62 °C und < 65 °C dispergiert und nach der Dispergierung die Temperatur von **T_{A1}** auf **T_{A2}**, wobei **T_{A2}** ≤ 60 °C, bevorzugt **T_{A2}** ≤ 50 °C, bevorzugter **T_{A2}** ≤ 45 °C, noch bevorzugter **T_{A2}** ≤ 40 °C absenkt.

Wenn es sich bei der Verbindung der Struktur **(I)** um die Struktur **(V)** handelt, wird in der gerade beschriebenen zweiten alternativen bevorzugten Ausführungsform des erfindungsgemäßen Verfahrens die Dispersion **D** insbesondere dadurch erzeugt, dass man die Mischung aus der Verbindung der Strukturformel **(V)** und der wässrigen Phase dispergiert, wobei zu Beginn der Dispergierung eine Temperatur **T_{A1}** im Bereich > 61 °C und < 65 °C, bevorzugt im Bereich ≥ 62 °C und < 65 °C eingestellt wird und man schon während der Dispergierung die Temperatur von **T_{A1}** auf **T_{A2},** wobei **T_{A2}** ≤ 60 °C, bevorzugt **T_{A2}** ≤ 50 °C, bevorzugter **T_{A2}** ≤ 45 °C, noch bevorzugter **T_{A2}** ≤ 40 °C absenkt.

Die Partikelgröße der festen Partikel der Verbindung der Strukturformel **(I)** in der wässrigen Phase der Dispersion **D** ist dabei nicht besonders beschränkt. Es ist jedoch vorteilhaft, wenn die Korngröße der festen Partikel der Verbindung der Strukturformel **(I)** in einem bestimmten Bereich liegt. Die Korngröße kann durch die vorbeschriebenen Verfahren leicht vom Fachmann eingestellt werden, zum Beispiel durch den Mahlvorgang oder gerade bei alternativen bevorzugten Ausführungsform des erfindungsgemäßen Verfahrens durch Variation der Dauer der Dispergierung oberhalb **T_{SMI}**.

Die Korngrößenverteilung (oder auch "Partikelgrößenverteilung") wird im Sinne der Erfindung mit dem in DIN 66156-2 beschriebenen Verfahren bestimmt, wobei Siebe gemäß DIN ISO 3310 eingesetzt werden.

So ist es erfindungsgemäß bevorzugt, wenn mindestens 50 %, bevorzugt mindestens 60 %, bevorzugter mindestens 70 %, noch bevorzugter mindestens 80 %, noch mehr bevorzugter mindestens 90 %, noch viel mehr bevorzugter mindestens 99 % der festen Partikel der eingesetzten Verbindung der Strukturformel **(I)** in der Dispersion **D** eine Korngröße von ≤ 800 µm, erfindungsgemäß mit dem in DIN 66156-2 beschriebenen Verfahren bestimmt, wobei Siebe gemäß DIN ISO 3310 eingesetzt werden, aufweisen.

Insbesondere weisen dabei gleichzeitig mindestens 80 %, bevorzugt mindestens 90 %, bevorzugter mindestens 99 % der festen Partikel der eingesetzten Verbindung der Strukturformel **(I)** in der Dispersion, die eine Korngröße von ≤ 800 µm aufweisen, eine Korngröße, die zwischen 32 und 400 µm liegt, auf.

Am Ende des Schrittes (a) des erfindungsgemäßen Verfahrens erhält man dann eine Dispersion **D** fester Partikel der Verbindung der Strukturformel **(I)** in einer wässrigen Phase.

Die wässrige Phase in der Dispersion **D** kann daneben weitere Bestandteile enthalten, insbesondere mindestens ein Bestandteil ausgewählt aus Vernetzer, Tenside, Regler.

Insbesondere umfasst die wässrige Phase in der Dispersion **D** auch mindestens einen Vernetzer. Als Vernetzer eignen sich Verbindungen welche mehr als eine polymerisierbare Gruppe aufweisen, bevorzugt ist der Vernetzer ausgewählt aus der Gruppe bestehend aus polyfunktionelle Verbindungen basierend auf (Meth)acrylsäure, polyfunktionelle Verbindungen basierend auf Allylether, polyfunktionelle Verbindungen basierend auf vinylischen Verbindungen. Polyfunktionelle Verbindungen basierend auf (Meth)acrylsäure sind dabei besonders bevorzugt.

Polyfunktionelle Verbindungen basierend auf (Meth)acrylsäure sind insbesondere ausgewählt aus Ethylenglykoldi(meth)acrylat, Diethylenglykoldi(meth)acrylat, Triethylenglykoldi(meth)acrylat, Polyethylenglykoldi(meth)acrylat, 1,3-Propandioldi(meth)acrylat, 2,3-Butandioldi(meth)acrylat, 1,4-Butandioldi(meth)acrylat,1,5-Pentandioldi(meth)acrylat, 1,6-Hexandioldi(meth)acrylat, 1,7-Heptandioldi(meth)acrylat, 1,8-Oktandioldi(meth)acrylat, 1,9-Nonandioldi(meth)acrylat, 1,10-Dekandioldi(meth)acrylat, Trimethylolpropantri(meth)acrylat, Glyceroldi(meth)acrylat, 2-Hydroxy-3-(meth)acryloxypropyl(meth)acrylat.

Polyfunktionelle Verbindungen basierend auf Allylether sind insbesondere ausgewählt aus der Gruppe bestehend aus Diethylenglykoldiallylether, Dibutylenglykoldiallylether.

Eine polyfunktionelle Verbindung basierend auf vinylischen Verbindungen ist insbesondere Divinylbenzol.

Wird ein Vernetzer eingesetzt, so wird dieser bevorzugt in einer solchen Menge eingesetzt, dass in der wässrigen Phase in der Dispersion **D** in Schritt (a) des erfindungsgemäßen Verfahrens alle Vernetzer in einer Menge von 0.001 bis 25 mol-%, bevorzugter 0.005 bis 10 mol-%, noch bevorzugter 0.01 bis 5 mol-%, jeweils bezogen auf alle Verbindungen der Struktur **(I)** in der Dispersion, eingesetzt werden.

Werden Vernetzer eingesetzt, so kann das Polymer **P¹** auch Wiederholungseinheiten, die auf diese Vernetzer zurückzuführen sind, aufweisen. Es versteht sich somit von selbst, dass zwischen den Polymerisierungseinheiten auch noch auf den Vernetzer zurückzuführende Wiederholungseinheiten im erhaltenen Polymer **P¹** vorliegen können.

Außerdem kann die wässrige Phase in der Dispersion **D** insbesondere auch mindestens ein Tensid, welches anionisch, kationisch, amphoterisch oder nichtionisch sein kann, umfassen. Besonders bevorzugt sind anionische und nichtionische Tenside.

Anionische Tenside sind insbesondere ausgewählt aus Natrium- oder Kaliumsalzen von Fettsäuren, Natriumalkylsulfaten (bevorzugt Natriumdodecylsulfat), Natriumalkylbenzolsulfonaten, Natriumalkylsulfonaten, Natriumalkylphosphaten, *N*-Acylmethyltauraten, Natrium-*N*-Methyl-*N*-Acylamidoproprionaten, Natriummonoalkylbiphenyletherdisulfonaten, Natriumnaphthalensulfonat-Formalinkondensaten, Natriumacylglutamaten, Natriumpolyoxyethylenalkylethersulfaten, Natriumpolyoxyethylenalkylphenyletheralkylbenzensulfonaten, Natriumpolyoxyethylenalkylethermethylcarboxylaten, Natriumpolyoxyethylenalkyletherethansulfonaten. Bevorzugt handelt es sich erfindungsgemäß bei den anionischen Tensiden um Natriumalkylsulfate, noch bevorzugter um Natriumdodecylsulfat.

Kationische Tenside sind insbesondere ausgewählt aus der Gruppe bestehend aus kationische Celluloseverbindungen, Monoalkyltrimethylammoniummethylsulfate, Alkyltrimethylammoniumchlorid, Distearyldimethylammoniumchlorid, Dialkyldimethylammoniumchlorid, Dialkyldimethylbenzylammoniumchlorid, Alkylpyridiniumchloride.

Nichtionische Tenside sind insbesondere ausgewählt aus der Gruppe bestehend aus Fettsäuremonoglyceriden, mindestens teilweise mit Fettsäure verestertes Sorbitan, Polyoxyethylenalkylethern, Polyoxyethylenalkylphenylethern (insbesondere Polyoxyethylennonylphenylether), Polyoxyethylenfettsäuremonoglyceriden, mindestens teilweise mit Fettsäure verestertes Polyoxyethylensorbitol oder -sorbitan, Polyoxyethylenlanolinalkoholethern, Polyethylenglykolfettsäuremonoestern und -diestern, Polyoxyethylenfettaminen, mindestens teilweise mit Fettsäure verestertes Polyglycerol, Bis(2-hydroxyethyl)alkylamin, Alkyldimethylaminoxid, Fettsäurealkylolamide, ω-Methoxypolyoxythylen-α-Alkylether, Block-Kopolymere von Polyoxyethylen und Polyoxypropylen, Polyoxyethylen-Polyoxypropylen-Alkylether, Polyoxyethylen-Acetylenglykol, mindestens teilweise mit Fettsäuren veresterte Zucker.

Amphoterische Tenside sind insbesondere ausgewählt aus der Gruppe bestehend aus *N*-Acylamido-*N*,*N*-dimethylaminobetain, *N*-Acylamidopropyl-*N,N'*-dimethyl-*N'*-β-hydroxypropylammoniumsulfobetain, *N*-Acylamidoethyl- *N'*-hydroxyethyl-*N'*-carboxymethylammoniumbetain, *N*-Alkyl-*N*-dimethyl-*N*-carboxymethylammoniumbetaine.

Wird ein Tensid eingesetzt, so wird dieses bevorzugt in einer solchen Menge eingesetzt, dass in der wässrigen Phase in der Dispersion **D** in Schritt (a) des erfindungsgemäßen Verfahrens die Gesamtmenge aller Tenside von 0.1 bis 10 Gew.-%, bevorzugter 0.5 bis 5 Gew.-%, noch bevorzugter 0.7 bis 2.5 Gew-%, jeweils bezogen auf das Gewicht des von der wässrigen Phase in der Dispersion **D** umfassten Wassers, beträgt.

Insbesondere umfasst die wässrige Phase in der Dispersion **D** auch mindestens einen Regler zur Reglung, insbesondere der Verringerung, der Molmasse des erhaltenen Polymers. Als Regler eignen sich Verbindungen mit mindestens einer Thiolgruppe. Bevorzugt ist der Regler ausgewählt aus der Gruppe bestehend aus *tert*-Butylmercaptan, Thioglykolsäure-2-ethylhexylester, Mercaptoethanol, Mercaptopropyltrimethoxysilan, *tert*-Dodecylmercaptan. Noch bevorzugter ist der Regler Thioglykolsäure-2-ethylhexylester.

Wird ein Regler eingesetzt, so wird dieser bevorzugt in einer solchen Menge eingesetzt, dass in der wässrigen Phase in der Dispersion **D** in Schritt (a) des erfindungsgemäßen Verfahrens die Gesamtmenge aller Regler von 0.01 bis 1 Gew.-%, bevorzugter 0.02 bis 0.5 Gew.-% jeweils bezogen auf das Gewicht aller von der Dispersion umfassten Verbindungen der Struktur **(I),** beträgt.

Die wässrige Phase kann auch einen Anteil an dem Fachmann geläufigen organischen Lösungsmitteln aufweisen, solange die Verbindung der Struktur **(I)** dabei als feste Partikel in der wässrigen Phase vorliegt. "Organische Lösungsmittel" sind insbesondere ausgewählt aus Toluol, Xylol, Benzol, Cyclohexan, Hexan, Ethylacetat, Tetrahydrofuran.

Es ist aber bevorzugt, dass die wässrige Phase keine organischen Lösungsmittel aufweist, was erfindungsgemäß bedeutet, dass der Anteil organischer Lösungsmittel, bezogen auf das Gesamtgewicht der wässrigen Phase insbesondere < 2 Gew.-%, bevorzugter < 1 Gew.-%, noch bevorzugter < 0.1 Gew.-% ist.

Im Schritt b) des erfindungsgemäßen Verfahrens erfolgt dann die Polymerisierung der festen Partikel der Verbindung der Strukturformel **(I)** der in Schritt (a) erzeugten Dispersion bei einer Temperatur, die unterhalb der Schmelztemperatur der eingesetzten Verbindung der Strukturformel **(I)** liegt.

Die Durchführung der Polymerisierung ist dem Fachmann geläufig. Dabei kann es sich um kationische, anionische oder radikalische Polymerisierung handeln, bevorzugt jedoch um radikalische oder anionische, noch bevorzugter radikalische Polymerisierung. Da es sich um die Polymerisierung fester Partikel in einer wässrigen Lösung handelt, ist es bevorzugt, die Dispersion **D** bei der Durchführung des Schrittes (b) des erfindungsgemäßen Verfahrens in Bewegung zu halten, beispielsweise durch Rühren oder Schütteln, um der Tendenz der Partikel, sich abzusetzen, entgegenzuwirken. Dies kann nach dem Fachmann geläufigen Verfahren geschehen.

Wesentliches Merkmal des erfindungsgemäßen Verfahrens ist es nun, dass die Polymerisierung in Schritt b) bei einer Temperatur, die unterhalb der Schmelztemperatur der eingesetzten Verbindung der Strukturformel **(I)** liegt, durchgeführt wird. Dies unterscheidet das erfindungsgemäße Verfahren von jenen im Stand der Technik (z.B. EP 1 752 474 A1, Beispiel 8) beschriebenen.

Bevorzugt wird die Polymerisierung in Schritt b) bei einer Temperatur, die 1 °C oder mehr unterhalb der Schmelztemperatur der eingesetzten Verbindung der Strukturformel **(I)** liegt, durchgeführt. Bevorzugter wird die Polymerisierung in Schritt b) bei einer Temperatur, die 5 °C oder mehr, noch bevorzugter 10 °C oder mehr, noch bevorzugter 20 °C oder mehr unterhalb der Schmelztemperatur der eingesetzten Verbindung der Strukturformel **(I)** liegt, durchgeführt.

Wenn es sich bei der Verbindung der Struktur **(I)** um die Struktur **(V)** handelt, wird der Schritt b) insbesondere bei einer Temperatur ≤ 60 °C, bevorzugt ≤ 50 °C, bevorzugter ≤ 45 °C, noch bevorzugter ≤ 40 °C durchgeführt.

Es versteht sich von selbst, dass die Polymerisierung in Schritt b) aber oberhalb der Temperatur durchgeführt wird, bei der die wässrige Phase in den festen Aggregatzustand übergeht.

Die Polymerisierung wird, wie dem Fachmann bekannt ist, durch Zugabe eines Polymerisierungsinitiators begonnen. Im Falle der hier bevorzugten radikalischen Polymerisierung handelt es sich dabei um Radikalstarter.

Der Polymerisierungsinitiator, also im Falle der hier bevorzugten radikalischen Polymerisierung der Radikalstarter, wird der in Schritt (a) erhaltenen Dispersion **D** vorzugsweise direkt zu Beginn des Schrittes (b), das heißt nach Absinken der Temperatur der in Schritt (a) erhaltenen Dispersion **D** unter den Schmelzpunkt der eingesetzten Verbindung der Strukturformel **(I),** zugesetzt.

Als Radikalstarter können alle dem Fachmann geläufigen Verbindungen eingesetzt werden. Insbesondere ist der Radikalstarter erfindungsgemäß ein wasserlöslicher und bevorzugt ausgewählt aus der Gruppe bestehend aus peroxidischen Radikalstartern und Redoxsysteme, wobei die peroxidischen Radikalstarter besonders bevorzugt sind.

Peroxidische Radikalstarter sind bevorzugt ausgewählt aus der Gruppe bestehend aus Persulfaten, Peroxodisulfate, bevorzugt Peroxodisulfate. Persulfate sind insbesondere Ammoniumpersulfat, Natriumpersulfat, Kaliumpersulfat. Peroxodisulfate sind insbesondere Ammoniumperoxodisulfat, Natriumperoxodisulfat, Kaliumperoxodisulfat, besonders bevorzugt Ammoniumperoxodisulfat, Kaliumperoxodisulfat.

Redoxsysteme sind bevorzugt ausgewählt aus Ammonium-Eisen(II)-Sulfat/Ammoniumpersulfat, Ethanolamin/ Kaliumpersulfat.

Insbesondere liegt in Schritt b) des erfindungsgemäßen Verfahrens die Temperatur der Dispersion **D** unterhalb der Schmelztemperatur der eingesetzten Verbindung der Strukturformel **(I),** bis mindestens 30 %, bevorzugt mindestens 40 %, bevorzugter mindestens 50 %, noch bevorzugter mindestens 60 %, noch mehr bevorzugter mindestens 70 %, noch viel mehr bevorzugter mindestens 80 %, besonders bevorzugter mindestens 90 %, noch bevorzugter mindestens 95 %, am bevorzugtesten mindestens 99 % der in Schritt (a) des erfindungsgemäßen Verfahrens eingesetzten Verbindung der Strukturformel **(I)** abreagiert sind. Am allerbevorzugtesten, wird der gesamte Schritt (b) bei einer Temperatur unterhalb der Schmelztemperatur der eingesetzten Verbindung der Strukturformel **(I)** durchgeführt.

Der Anteil der abreagierten Verbindung der Strukturformel **(I)** kann über den Restmonomergehalt in der Lösung ermittelt werden und ergibt sich aus der Differenz zwischen dem ursprünglich eingesetzten Menge an Verbindung der Strukturformel **(I)** und dem ermittelten Restmonomergehalt. Der Restmonomergehalt kann erfindungsgemäß durch HPLC-Analyse ermittelt werden, erfindungsgemäß beispielsweise dadurch, dass eine Probe der Lösung gemäß der Messmethode **M1** (beschrieben im Beispielteil) vermessen wird.

Dies gewährleistet, dass die Polymerisierung zwischen festen Partikeln der Verbindung der Strukturformel **(I)** stattfindet.

Es wurden nun folgende überraschenden Beobachtungen gemacht:

Erstens ist es im Stand der Technik nicht zu erwarten, dass eine Polymerisierung der Verbindung der Strukturformel **(I)** überhaupt in festem Zustand möglich ist. Zweitens ist es überraschend, dass das erfindungsgemäße Verfahren zu Polymeren führt, die viel leichter aufzuarbeiten sind. Während die nach den herkömmlichen Verfahren erhaltenen Polymere zu Koagulaten zusammenkleben, die nur schwer aufgearbeitet werden können, ergibt das erfindungsgemäße Verfahren fein verteilte Polymerpartikel, die durch einfache Verfahren wie zum Beispiel Filtration abgetrennt und weiterverwendet werden können. Demgegenüber müssen die nach den Verfahren des Standes der Technik erhaltenen Produkte aufwändig isoliert und zusätzlich gemahlen werden, um weiter verarbeitet werden zu können. Dies ist vor allem in großtechnischen Verfahren wichtig, in denen das erfindungsgemäße Verfahren die Einsparung eines ganzen Arbeitsschrittes erlaubt.

Es ist in einer weiteren Ausführungsform der vorliegenden Erfindung auch möglich, zusätzlich die Polymerisierung in Schritt (b) in Gegenwart von Leitfähigkeitsadditiven wie zum Beispiel Carbon-Nanoplättchen oder *"carbon nanotubes"* durchzuführen, was die spätere Verarbeitbarkeit in zum Beispiel einer Elektrode erleichtert.

Im Anschluss an Schritt (b) wird dann ein Polymer **P¹** umfassend Wiederholungseinheiten der Strukturformel **(VI)** mit 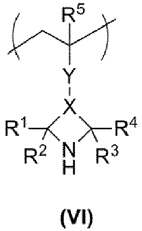 erhalten.

Nach Erhalt des Polymers **P¹** kann dieses isoliert werden, wozu dem Fachmann geläufige Methoden zur Verfügung stehen. Wie beschrieben zeichnet sich das erfindungsgemäße Verfahren dadurch aus, dass das Produkt direkt filtriert werden kann und dann in einer gut handhabbaren Partikelgröße vorliegt. Demgegenüber müssen die Produkte des Standes der Technik aufwändiger isoliert und dann zusätzlich gemahlen werden, um gut weiter verarbeitbare Produkte zu erhalten. Nichts destotrotz kann das nach Schritt (b) erhaltene Polymer **P¹** natürlich den dem Fachmann geläufigen Reinigungsmethoden unterzogen werden, wie zum Beispiel Waschen mit Wasser oder organischen Lösungsmitteln wie Hexan und/oder Methanol, gefolgt von einem Trocknungsschritt.

Alternativ, und bevorzugt, kann das in Schritt (b) erhaltene Polymer **P¹** aber auch direkt in der wässrigen Phase zum Nitroxid oxidiert werden ("Oxidation zum Nitroxid" wird im Sinne der Erfindung auch als "Nitroxidierung" bezeichnet).

In einer bevorzugten Ausführungsform wird das in Schritt (b) erhaltene Polymer **P¹** im Anschluss an Schritt (b) einer Nitroxidierung unterzogen, wodurch ein Polymer **P²** umfassend Wiederholungseinheiten der Strukturformel **(VII)** mit 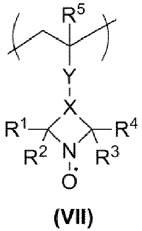 erhalten wird. Es versteht sich von selbst, dass in Struktur **(VII)** die Reste R¹, R², R³, R⁴, R⁵, X, Y die Bedeutung haben, die jeweils für diese Reste in Struktur **(I)** angegeben sind.

Dazu können die dem Fachmann geläufigen Verfahren zur Überführung eines sekundären Amins in ein radikalisches Nitroxid genutzt werden (z.B. EP 1 911 775 A1). Beispielsweise kann das Polymer **P₁** in einem inerten Lösungsmittel gelöst werden und dann ein Oxidationsmittel bevorzugt unter Rühren zugegeben werden.

Das inerte Lösungsmittel ist insbesondere ausgewählt aus der Gruppe bestehend aus halogenierte Kohlenwasserstoffe, aliphatische Nitrile, aromatische Nitrile, Alkohole, aromatische Kohlenwasserstoffe, Wasser. Bevorzugt wird Wasser und/oder Alkohole als inertes Lösungsmittel genutzt, noch bevorzugter Mischungen aus Wasser und Alkoholen.

Halogenierte Kohlenwasserstoffe sind bevorzugt ausgewählt aus der Gruppe bestehend aus Dichlormethan, Chloroform, Dichlorethan. Aliphatische Nitrile sind bevorzugt ausgewählt aus der Gruppe bestehend aus Acetonitril, Proprionitril, Butyronitril. Aromatische Nitrile sind bevorzugt ausgewählt aus der Gruppe bestehend aus Benzonitril, Phenylacetonitril. Alkohole sind bevorzugt ausgewählt aus der Gruppe bestehend aus Methanol, Ethanol, *n*-Propanol, *iso*-Propanol, *n*-Butanol, *sec*-Butanol, *iso*-Butanol, *tert*-Butanol, bevorzugt Methanol. Aromatische Kohlenwasserstoffe sind bevorzugt ausgewählt aus der Gruppe bestehend aus Benzol, Toluol.

Das inerte Lösungsmittels wird insbesondere in einer solchen Menge eingesetzt, dass das Gewicht des eingesetzten inerten Lösungsmittels das 10 bis 5000-fache, bevorzugt 50 bis 3000-fache, bevorzugter 100-fache des Gewichts des eingesetzten Polymers **P¹** beträgt.

Als Oxidationsmittel können ebenfalls die dem Fachmann geläufigen Oxidationsmittel eingesetzt werden. Das Oxidationsmittel ist insbesondere ausgewählt aus der Gruppe bestehend aus Peroxiden, Metallverbindungen, Luft, bevorzugt Peroxide.

Peroxide sind bevorzugt ausgewählt aus der Gruppe bestehend aus Wasserstoffperoxid, Perameisensäure, Peressigsäure, Perbenzoesäure, Perphthalsäure, *meta*-Chlorperbenzoësäure. Bevorzugtestes Peroxid ist Wasserstoffperoxid.

Metallverbindungen sind bevorzugt ausgewählt aus der Gruppe bestehend aus Silberoxid, Bleitetraacetat, Kaliumhexacyanoferrat(III), Kaliumpermanganat.

Das Oxidationsmittel wird insbesondere in einer solchen Menge eingesetzt, dass pro Mol des zur Polymerisierung eingesetzten Monomers **(I)** 1 bis 40 mol, bevorzugter 1.5 bis 15 mol, noch bevorzugter 1.5 bis 5 mol, noch mehr bevorzugter 1.6 bis 3 mol des Oxidationsmittels eingesetzt werden.

In der Oxidation kann außerdem auch ein Katalysator genutzt werden. Die in der Nitroxidierung eingesetzten Katalysatoren sind dem Fachmann geläufig.

Insbesondere können zur Nitroxidierung Katalysatoren ausgewählt aus Verbindungen der Metalle der Chromgruppe, insbesondere Molybdän und Wolfram eingesetzt werden. Bevorzugt ist der zur Nitroxidierung eingesetzte Katalysator eine Verbindung des Wolframs.

Verbindungen des Wolframs sind insbesondere ausgewählt aus der Gruppe bestehend aus Wolframsäure, Wolframatophosphorsäure, Parawolframsäure, Wolframate, Wolframatophosphate, Parawolframate, Wolframoxide, Wolframcarbonyle. Bevorzugt sind Verbindungen des Wolframs erfindungsgemäß ausgewählt aus Alkalimetallsalzen und Ammoniumsalzen der Wolframate, bevorzugter aus der Gruppe bestehend aus Ammoniumwolframat, Natriumwolframat, Kaliumwolframat, noch bevorzugter Natriumwolframat.

Verbindungen des Molybdäns sind insbesondere ausgewählt aus der Gruppe bestehend aus Molybdänsäure, Molybdänophosphorsäure, Paramolybdänsäure, Molybdate, Molybdänophosphate, Paramolybdate, Molybdänoxide, Molybdäncarbonyle. Bevorzugt sind Verbindungen des Wolframs erfindungsgemäß ausgewählt aus Alkalimetallsalzen und Ammoniumsalzen der Molybdate, bevorzugter aus der Gruppe bestehend aus Ammoniummolybdat, Natriummolybdat, Kaliummolybdat, Molybdäntrioxid, Molybdänhexacarbonyl.

Der Katalysator wird insbesondere in einer solchen Menge eingesetzt, dass pro Mol der in Schritt (a) des erfindungsgemäßen Verfahrens eingesetzten Verbindung der Struktur **(I)** 0.1 bis 10 mol-%, bevorzugter 1 bis 5 mol-%, noch bevorzugter 2 bis 3.5 mol-%, noch mehr bevorzugter 2.5 bis 3.0 mol-% des Katalysators eingesetzt werden.

Die Temperatur bei der Nitroxidierung ist nicht besonders beschränkt, und liegt insbesondere im Bereich 0 bis 75 °C, bevorzugt bei 20 bis 50 °C.

Die Reaktionsdauer ist ebenso wenig besonders beschränkt, und liegt insbesondere bei 1 bis 10 Stunden, bevorzugt 3 bis 6 Stunden.

Die Isolierung des erhaltenen Polymers **P²** erfolgt dann ebenfalls mit dem Fachmann geläufigen Methoden, wie Filtration und anschließende Trocknung.

Das Polymer **P²** eignet sich insbesondere zur Verwendung als redoxaktives Elektrodenmaterial in einem elektrischen Ladungsspeicher, bevorzugt zur Speicherung elektrischer Energie, und noch bevorzugter als positives Elektrodenelement.

Noch bevorzugter ist das redoxaktive Elektrodenmaterial dabei als mindestens teilweise Oberflächenbeschichtung von Elektrodenelementen für elektrische Ladungsspeicher, insbesondere Sekundärbatterien, ausgebildet. Elektrodenelemente umfassen dabei mindestens eine Oberflächenschicht und ein Substrat.

Ein redoxaktives Material zur Speicherung elektrischer Energie ist ein Material, welches elektrische Ladung beispielsweise durch Aufnahme bzw. Abgabe von Elektronen speichern und wieder abgeben kann. Dieses Material kann beispielsweise als aktives Elektrodenmaterial in einem elektrischen Ladungsspeicher eingesetzt werden. Solche elektrischen Ladungsspeicher zur Speicherung elektrischer Energie sind insbesondere aus der Gruppe bestehend aus Sekundärbatterien (oder auch "Akkumulatoren" genannt), Redox-Flowbatterien, Superkondensatoren ausgewählt und bevorzugt Sekundärbatterien.

Bevorzugt handelt es sich bei dem elektrischen Ladungsspeicher um eine Sekundärbatterie. Eine Sekundärbatterie umfasst eine negative und eine positive Elektrode, die durch einen Separator voneinander getrennt werden, sowie einem Elektrolyt, welcher die Elektroden und den Separator umschließt.

Der Separator ist eine poröse Schicht, die ionendurchlässig ist und den Ladungsausgleich ermöglicht. Die Aufgabe des Separators besteht darin, die positive Elektrode von der negativen Elektrode zu trennen und den Ladungsausgleich durch Permutation von Ionen zu ermöglichen. Als Separator der sekundären Batterie wird insbesondere ein poröses Material, bevorzugt eine Membran bestehend aus einer polymeren Verbindung, wie beispielsweise Polyolefin, Polyamid, oder Polyester, verwendet. Weiterhin können Separatoren aus porösen keramischen Materialien verwendet werden.

Die Hauptaufgabe des Elektrolyten ist, die lonenleitfähigkeit zu gewährleisten, die zum Ladungsausgleich nötig ist. Der Elektrolyt der sekundären Batterie kann sowohl eine Flüssigkeit, als auch eine oligomere oder polymere Verbindung mit hoher lonenleitfähigkeit ("*gel electrolyte*" oder "*solid state electrolyte*") sein. Bevorzugt ist er aber eine oligomere oder polymere Verbindung.

Ist der Elektrolyt flüssig, so setzt er sich insbesondere aus einem oder mehreren Lösungsmitteln und einem oder mehreren Leitsalzen zusammen.

Das Lösungsmittel der Elektrolyten umfasst bevorzugt unabhängig voneinander eines oder mehrere Lösungsmittel mit hohem Siedepunkt und hoher lonenleitfähigkeit, aber niedriger Viskosität, wie beispielsweise Acetonitril, Dimethylsulfoxid, Ethylencarbonat, Propylencarbonat, Dimethylcarbonat, Diethylcarbonat, Methylethylcarbonat, γ-Butyrolacton, Tetrahydrofuran, Dioxolan, 1,2-Dimethoxyethan, 1,2-Diethoxyethan, Diglyme, Triglyme, Tetraglyme, Ethylacetat, 1,3-Dioxolan oder Wasser.

Das Leitsalz des Elektrolyten besteht aus einem Kation der Formel M^{e+} und einem Anion oder Formel An^{f-} der Formel (M^{e+})ₐ(An^{f-})_{b}, wobei e und f Ganzzahlen in Abhängigkeit der Ladung von M und An sind; a und b sind Ganzzahlen, welche die molekulare Zusammensetzung des Leitsalzes repräsentieren.

Als Kation des oben genannten Leitsalzes werden positiv geladene Ionen, bevorzugt Metalle der ersten und zweiten Hauptgruppe, wie beispielsweise Lithium, Natrium, Kalium oder Magnesium, aber auch andere Metalle der Nebengruppen, wie Zink, sowie organische Kationen, wie beispielsweise quartäre Ammoniumverbindungen wie Tetraalkylammoniumverbindungen, verwendet. Bevorzugtes Kation ist Lithium.

Als Anionen des besagten Leitsalzes werden bevorzugt anorganische Anionen, wie Hexafluorophosphat, Tetrafluoroborat, Triflat, Hexafluoroarsenat, Hexafluoroantimonat, Tetrafluoroaluminat, Tetrafluoroindat, Perchlorat, Bis(oxolato)borat, Tetrachloroaluminiat, Tetrachlorogallat, aber auch organische Anionen, wie beispielsweise N(CF₃SO₂)₂⁻, CF₃SO₃⁻, Alkoholate, wie beispielsweise, *tert*-Butanolat oder *iso*-Propylalkoholat, aber auch Halogenide, wie Fluorid, Chlorid, Bromid sowie lodid, verwendet. Bevorzugtes Anion ist Perchlorat, ClO₄⁻.

Bevorzugtes Leitsalz ist somit LiClO₄.

Werden ionische Flüssigkeiten verwendet, können diese sowohl als Lösungsmittel des Elektrolyten, als Leitsalz aber auch als kompletter Elektrolyt verwendet werden.

In der Ausführungsform, in der das redoxaktive Elektrodenmaterial dabei als mindestens teilweise Oberflächenbeschichtung von Elektrodenelementen für elektrische Ladungsspeicher, insbesondere Sekundärbatterien, ausgebildet ist, weist ein Elektrodenelement mindestens teilweise eine Schicht auf einer Substratoberfläche auf. Diese Schicht umfasst insbesondere eine Zusammensetzung, enthaltend das erfindungsgemäße Polymer als redoxaktives Material zur Ladungsspeicherung und insbesondere zumindest auch ein Leitfähigkeitsadditiv sowie insbesondere auch zumindest ein Bindeadditiv.

Die Aufbringung dieser Zusammensetzung (anderer Ausdruck für Zusammensetzung: "Komposit") auf dem Substrat ist mittels dem Fachmann bekannten Verfahren möglich. Insbesondere wird das erfindungsgemäße Polymer mit Hilfe eines Elektrodenslurrys auf dem Substrat aufgebracht.

Das Substrat des Elektrodenelements ist insbesondere ausgewählt aus leitfähigen Materialien, bevorzugt Metallen, Kohlenstoffmaterialien, Oxidsubstanzen.

Bevorzugte Metalle sind ausgewählt aus Platin, Gold, Eisen, Kupfer, Aluminium oder eine Kombination aus diesen Metallen. Bevorzugte Kohlenstoffmaterialien, sind ausgewählt aus Glaskohlenstoff, Graphitfolie, Graphen, Kohlenstofffelle. Bevorzugte Oxidsubstanzen sind beispielsweise ausgewählt aus der Gruppe bestehend aus Indiumzinnoxid (ITO), Indiumzinkoxid (IZO), Antimonzinkoxid (AZO), Fluorzinnoxid (FTO) oder Antimonzinnoxid (ATO).

Die Oberflächenschicht des Elektrodenelements umfasst zumindest das erfindungsgemäße Polymer als redoxaktives Material zur Ladungsspeicherung sowie insbesondere zumindest ein Leitfähigkeitsadditiv und ein Bindeadditiv.

Das Leitfähigkeitsadditiv ist insbesondere mindestens ein elektrisch leitendes Material, bevorzugt ausgewählt aus der Gruppe bestehend aus Kohlenstoffmaterialen, elektrisch leitenden Polymeren, insbesondere sind es Kohlenstoffmaterialien. Kohlenstoffmaterialien sind insbesondere aus der Gruppe bestehend aus Kohlenstoffplättchen, Kohlenstofffasern, Kohlenstoffnanoröhren ("*carbon nanotubes*"), Graphit, Ruß, Graphen ausgewählt, und sind besonders bevorzugt Kohlenstofffasern. Elektrisch leitende Polymere sind insbesondere aus der Gruppe bestehend aus Polyanilinen, Polythiophenen, Polyacetylenen, Poly(3,4-ethylendioxythiophen)polystyrensulfonat (= PEDOT:PSS), Polyarcenen ausgewählt.

Bindeadditive sind insbesondere Materialien mit Bindeeigenschaften und bevorzugt Polymere ausgewählt aus der Gruppe bestehend aus Polytetrafluoroethylen, Polyvinylidenfluorid, Polyhexafluoropropylen, Polyvinylchlorid, Polycarbonat, Polystyrol, Polyacrylate, Polymethacrylate, Polysulfone, Cellulosederivate, Polyurethane.

Das Polymer **P²** wird dabei insbesondere in einem Elektrodenslurry auf das Substrat des Elektrodenelementes aufgebracht.

Der Elektrodenslurry ist eine Lösung oder Suspension und umfasst das erfindungsgemäße Polymer sowie insbesondere das vorstehend beschriebene Leitfähigkeitsadditiv und das vorstehend beschriebene Bindeadditiv.

Der Elektrodenslurry umfasst bevorzugt ein Lösungsmittel und weitere Bestandteile umfassend redoxaktives Material zur Speicherung elektrischer Energie (bei dem es sich insbesondere um das erfindungsgemäße Polymer handelt), sowie bevorzugt auch das Leitfähigkeitsadditiv und das Bindeadditiv.

In den weiteren Bestandteilen ist bevorzugt der Anteil an redoxaktivem Material zur Speicherung elektrischer Energie (bei dem es sich insbesondere um das erfindungsgemäße Polymer handelt) von 5 bis 100 Gewichtsprozent, der Anteil des Leitfähigkeitsadditiv 0 bis 80, bevorzugt 5 bis 80, Gewichtsprozent, und der Anteil an Bindeadditiv 0 bis 10, bevorzugt 1 bis 10, Gewichtsprozent, wobei die Summe 100 Gewichtsprozent ergibt.

Als Lösungsmittel für den Elektrodenslurry werden unabhängig voneinander ein oder mehrere Lösungsmittel, bevorzugt Lösungsmittel mit hohem Siedepunkt, bevorzugter ausgewählt aus der Gruppe bestehend aus *N*-Methyl-2-pyrrolidon, Wasser, Dimethylsulfoxid, Ethylencarbonat, Propylencarbonat, Dimethylcarbonat, Methylethylcarbonat, γ-Butyrolacton, Tetrahydrofuran, Dioxolan, Sulfolan, *N,N'*-Dimethylformamid, *N,N'*-Dimethylacetamid, verwendet. Die Konzentration des redoxaktiven Materials, insbesondere des erfindungsgemäßen Polymers, zur Speicherung elektrischer Energie im oben genannten Elektrodenslurry beträgt bevorzugt zwischen 0.1 und 10 mg/ml, besonders bevorzugt zwischen 0.5 und 5 mg/ml.

Wird das Polymer dieser Erfindung als redoxaktives Material für elektrische Ladungsspeicher als positives Elektrodenelement verwendet, so wird als redoxaktives Material zur elektrischen Ladungsspeicherung in der negativen Elektrode ein Material verwendet, welches eine Redoxreaktion bei einem niedrigeren elektrochemischen Potential als das Polymer dieser Erfindung zeigt. Bevorzugt sind solche Materialien ausgewählt aus der Gruppe bestehend aus Kohlenstoffmaterialien, die insbesondere aus der Gruppe bestehend aus Graphit, Graphen, Ruß, Kohlenstofffasern, Kohlenstoffnanoröhren ausgewählt sind, Metalle oder Legierungen, die insbesondere aus der Gruppe bestehend aus Lithium, Natrium, Magnesium, Lithium-Aluminium, Li-Si, Li-Sn, Li-Ti, Si, SiO, SiO₂, Si-SiO₂-Komplex, Zn, Sn, SnO, SnO₂, PbO, PbO₂, GeO, GeO₂, WO₂, MoO₂, Fe₂O₃, Nb₂O₅, TiO₂, Li₄Ti₅O₁₂, und Li₂Ti₃O₇ ausgewählt sind, sowie organische redoxaktives Materialien. Beispiele organischer redoxaktiver Materialien sind Verbindungen mit einem stabilen organischen Radikal, Verbindungen mit einer Organoschwefeleinheit, mit einer Chinonstruktur, Verbindungen mit einem Dionsystem, konjugierte Carbonsäuren und deren Salze, Verbindungen mit einer Phtalimid- bzw. Naphtalimidstruktur, Verbindungen mit einer Disulfidverbindung sowie Verbindungen mit einer Phenanthrenstruktur und deren Derivate. Wird in der negativen Elektrode eine oben genannte redoxaktive oligomere oder polymere Verbindung eingesetzt, so kann diese Verbindung auch ein Komposit, also eine Zusammensetzung, sein, bestehend aus dieser oligomeren oder polymeren Verbindung, einem Leitfähigkeitsadditiv und einem Bindeadditiv in einem beliebigen Verhältnis. Das Leitfähigkeitsadditiv ist auch in diesem Fall insbesondere mindestens ein elektrisch leitendes Material, bevorzugt ausgewählt aus der Gruppe bestehend aus Kohlenstoffmaterialen, elektrisch leitenden Polymeren, insbesondere sind es Kohlenstoffmaterialien. Kohlenstoffmaterialien sind insbesondere aus der Gruppe bestehend aus Kohlenstofffasern, Kohlenstoffnanoröhren, Graphit, Ruß, Graphen ausgewählt, und sind besonders bevorzugt Kohlenstofffasern. Elektrisch leitende Polymere sind insbesondere aus der Gruppe bestehend aus Polyanilinen, Polythiophenen, Polyacetylenen, Poly(3,4-ethylendioxythiophen) polystyrensulfonat (= "PEDOT:PSS"), Polyarcene ausgewählt. Bindeadditive sind auch in diesem Fall insbesondere Materialien mit Bindeeigenschaften und bevorzugt Polymere ausgewählt aus der Gruppe bestehend aus Polytetrafluoroethylen, Polyvinylidenfluorid, Polyhexafluoropropylen, Polyvinylchlorid, Polycarbonat, Polystyrol, Polyacrylate, Polymethacrylate, Polysulfone, Cellulosederivate, Polyurethane.

Dieses Komposit kann wie oben beschrieben mit Hilfe eines Elektrodenslurrys durch ein bekanntes Verfahren zur Filmbildung als Schicht auf einem Substrat vorliegen.

Die nachfolgenden Beispiele sollen die Erfindung weiter erläutern, ohne diese darauf zu beschränken.

### Beispiele

### I. Verwendete Chemikalien

2,2,6,6-Tetramethyl-4-piperidinylmethacrylat (CAS-Nummer: 31582-45-3; Schmelzpunkt 61 °C, im Folgenden abgekürzt als "TAA-ol-MA") wurde nach Verfahren des Standes der Technik synthetisiert.

Natriumlaurylsulfat (CAS-Nummer: 151-21-3) wurde erhalten von Cognis und BASF.

Thioglycolsäure-2-ethylhexylester (CAS-Nummer: 7659-86-1) wurde erhalten von Spiess Chemische Fabrik GmbH.

Triethylenglycoldimethacrylat (CAS-Nummer: 109-16-0) wurde erhalten von Evonik Industries AG.

Ethylenglycoldimethacrylat (CAS-Nummer: 97-90-5) wurde erhalten von Evonik.

Ammoniumperoxodisulfat (CAS-Nummer: 7727-54-0) wurde erhalten von Sigma Aldrich.

Kaliumperoxodisulfat (CAS-Nummer: 7722-21-1) wurde erhalten von Sigma Aldrich.

Polyoxyethylennonylphenylether (CAS-Nummer: 68412-54-4) wurde erhalten von Sigma Aldrich.

Dodecylbenzolsulfonsäurenatriumsalz (CAS-Nummer: 25155-30-0) wurde erhalten von Sigma Aldrich.

4,4'-Azobis(4-cyanovaleriansäure) (CAS-Nummer: 2638-94-0) wurde erhalten von Wako V-501 #AWL2803.

Natriumwolframatdihydrat (CAS-Nummer: 10213-10-2) wurde erhalten von Sigma Aldrich.

Ethylendiamintetraessigsäure (im Folgenden als "EDTA" abgekürzt; CAS-Nummer: 60-00-4) wurde erhalten von Roth.

Polysorbat wurde (als "TEGO SMO 80V") von Evonik Industries AG erhalten.

Bei den in **E6** verwendeten Graphen Nanoplatelets handelt es sich um XG Sciences xGnP C 500, während die Multi-Wall Carbon Nanotubes MWCNT von Nanocyl NC7000 waren.

### II. Meßmethoden

### M1: Bestimmung des Gehalts an Verbindung (I) in einer Probe, gezeigt anhand von TAA-ol-MA

50 mg bis 1 g der Probe, auf 0.0001 g genau, wurden in einen 10 mL Messkolben eingewogen und mit Acetonitril auf Marke aufgefüllt. Die Proben enthielten unlösliches, da hochvernetztes, Polymer und wurden, um das TAA-ol-MA herauszulösen, für 2 Stunden auf einem Rührer dispergiert. Diese Lösung wurde in HPLC-Vials abgefüllt und analysiert.

Dann erfolgt eine HPLC Analyse mit folgender Gerätschaft:
HPLC-Säule Type: ODS-3 RP18 - Säulendimensionen: 125 mm lang, Innendurchmesser 3 mm; 5 µm Packungsmaterial;
Gradient: von 0 min bis 15 min wurde der Gradient von 1 : 9 = Methanol : Phosphatpuffer pH 4.5 auf 9 : 1 = Methanol: Phosphatpuffer erhöht und dann mit 9 : 1 = Methanol : Phosphatpuffer bis 18 Minuten eluiert.

Als Kalibrierungslösung wurdeN 50 mg TAA-ol-MA in 50 mL Messkolben genutzt.

Über die Integration der peak-Flächen im HPLC-Chromatogramm wurde dann die Menge an TAA-ol-MA in der jeweiligen Probe bestimmt.

### III. Versuchsvorschriften

**V1** und **V2** sind nichterfinderische Beispiele, **E1** bis **E6** sind erfinderische Beispiele.

### V1: Nachstellung des Beispiels 8 aus der EP 1 752 474 A1

150.0 g TAA-ol-MA, 1 g einer Mischung von 2 Teilen Dodecylbenzolsulfonsäurenatriumsalz und 1 Teil Polyoxyethylennonylphenylether und 2.7 g Ethylenglycoldimethacrylat wurden in einem 1 I Doppelmantelreaktor mit Rührer und Kühler in 467 ml Wasser gegeben und auf 65°C erhitzt. Dann wurde 1 Stunde bei 65 °C gerührt, und eine homogene Lösung erhalten. Dann wurde die Lösung mit Stickstoff überlagert und 0.38 g Kaliumperoxodisulfat wurden hinzugefügt. Danach wurde die Lösung auf 70 °C hochgeheizt und 6 Stunden reagieren gelassen. Danach wurde die Lösung auf Raumtemperatur abgekühlt und in 2 I Wasser (5 °C) gegeben. Man beobachtete nur wenige feine Partikel, dafür aber Anbackungen und Koagulat von über 50% im Reaktor. Dies machte eine Isolierung des Polymers aus dem Reaktor schwierig und zeitaufwändig. Die Ausbeute an Polymer wurde zu ∼ 90 % bestimmt.

### V2: Wiederholung der V1 mit höherer Tensidmenge

Der Versuch **V1** wurde wiederholt, nur dass 3 g einer Mischung von 2 Teilen Dodecylbenzolsulfonsäurenatriumsalz und 1 Teil Polyoxyethylennonylphenylether eingesetzt wurden.

Hier war die Koagulation des erhaltenen Polymers noch stärker, und eine Isolierung desselben aus dem Reaktor war noch schwieriger.

### E1: Beispiel 8 aus der EP 1 752 474 A1, aber Polymerisierung bei Temperatur < Schmelzpunkt

150.0 g TAA-ol-MA (Schmelzpunkt 61 °C), 1 g einer Mischung von 2 Teilen Dodecylbenzolsulfonsäurenatriumsalz und 1 Teil Polyoxyethylennonylphenylether und 2.7 g Ethylenglycoldimethacrylat wurden in einem 1 I Doppelmantelreaktor mit Rührer und Kühler in 467 ml Wasser gegeben und auf 65°C erhitzt. Danach wurde die Mischung 15 min bei 6000 Upm mit einem Ultraturrax (Gerät: Dispergierer der T-Serie Ultra-Turrax; Firma: IKA-Werke GmbH und Co. KG; Model: T 25 D; Dispergierwerkzeug: S 25 N - 25 G) und danach unter Abkühlen auf 40 °C während 30 Minuten dispergiert.

Die Hälfte der Dispersion wurde abgetrennt und die Größe der Partikel in der erhaltenen Dispersion wurde mit dem in DIN 66156-2 beschriebenen Verfahren bestimmt, wobei Siebe gemäß DIN ISO 3310 eingesetzt wurden.

Die Ergebnisse der Partikelgrößen sind in der folgenden Tabelle dargestellt:

| Partikelgröße [µm] | Anteil in % |
|---|---|
| > 800 | 0.16 |
| 600 - 800 | 0.35 |
| 400 - 600 | 1.34 |
| 200 - 400 | 23.77 |
| 100 - 200 | 62.55 |
| 63 - 100 | 11.39 |
| 32 - 63 | 0.43 |
| < 32 | 0.00 |

Die so erhaltene Dispersion wurde in einen Reaktor überführt, dort weiterhin auf 40 °C temperiert. Es wurde Stickstoff überleitet und die Stickstoffleitung während der folgenden Reaktion fortgesetzt. Danach wurden 0.27 g Ammoniumperoxodisulfat zugegeben und über Nacht gerührt, wobei die Temperatur zwischen 40 °C und 45 °C lag. Zur Vervollständigung der Reaktion wurde dann noch 1 Stunde bei 65 °C polymerisiert. Dann wurde die Lösung auf Raumtemperatur abgekühlt.

Die quantitative Ausbeute an Polymer entsprach der in **V1** ermittelten, jedoch wurde keinerlei Koagulat in der erhaltenen Mischung beobachtet, lediglich einige Ablagerungen an der Wand des Reaktors. Das Polymer lag als feinverteilter Niederschlag im Reaktor vor und konnte problemlos isoliert und abfiltriert werden.

### E2: Wiederholung der E1 mit höherer Tensidmenge

Der Versuch **E1** wurde wiederholt, nur dass 3 g einer Mischung von 2 Teilen Dodecylbenzolsulfonsäurenatriumsalz und 1 Teil Polyoxyethylennonylphenylether eingesetzt wurden.

Nach Herstellung der Dispersion wurde wieder die Hälfte der Dispersion abgetrennt und die Größe der Partikel in der erhaltenen Dispersion wurde mit dem in DIN 66156-2 beschriebenen Verfahren bestimmt, wobei Siebe gemäß DIN ISO 3310 eingesetzt wurden.

Die Ergebnisse der Partikelgrößen sind in der folgenden Tabelle dargestellt:

| Partikelgröße [µm] | Anteil in % |
|---|---|
| > 800 | 0,59 |
| 600 - 800 | 1,94 |
| 400 - 600 | 4,83 |
| 200 - 400 | 13,22 |
| 100 - 200 | 54,53 |
| 63 - 100 | 23,90 |
| 32 - 63 | 0,99 |
| < 32 | 0,00 |

Hier war die Koagulation des erhaltenen Polymers ebenso wenig vorhanden wie bei **E1**, und eine Isolierung desselben aus dem Reaktor war problemlos.

Der Vergleich aus **V1** und **V2** mit **E1** bzw. **E2** zeigt, dass mit dem erfindungsgemäßen Verfahren ein feiner verteiltes Polymer erhalten wird, was die Aufarbeitung desselben deutlich erleichtert.

Die im Folgenden beschriebenen Versuche **E3** bis **E6** zeigen, dass das erhaltene Polymer auch vorteilhaft oxidiert werden kann, wie es zur Herstellung eines Elektrodenmaterials nötig ist.

### Beispiel E3

60.0 g TAA-ol-MA, 4.0 g 15 %-ige wässrige Natriumlaurylsulfatlösung, 0.3 g Thioglycolsäure-2-ethylhexylester und 0.6 g Triethylenglycoldimethacrylat wurden in einem 1 I Doppelmantelreaktor mit Rührer und Kühler in 240 ml Wasser gegeben und auf 65°C erhitzt. Nachdem das TAA-ol-MA geschmolzen war, wurde 15 min bei 6000 Upm mit einem Ultra Turrax dispergiert. Anschließend wurde unter Ultra Turrax Scherung langsam über 30 Minuten abgekühlt. Bei 40 °C wurden dann zur Polymerisierung 0.06 g Ammoniumperoxodisulfat zugesetzt und über 2 Stunden reagiert. Anschließend wurde über Nacht bei 45°C weiter reagiert und dann über 1 h bei 65°C die Polymerisierung vervollständigt. Nach Abkühlen auf Raumtemperatur wurde dann die Reaktionslösung auf das halbe Volumen eingeengt und die Partikel durch Zugabe von 240 ml Methanol gequollen. Anschließend erfolgte die Zugabe von 2.6 g Natriumwolframatdihydrat und 0.7 g EDTA zur Oxidationskatalyse. Die Oxidation erfolgte dann durch portionsweisen Zusatz von 3 mal 9 g 30 %ige wässrige Wasserstoffperoxidlösung im halbstündigen Rhythmus und nach weiteren 1.5 Stunden einer weiteren Zugabe von 26.8 g Wasserstoffperoxidlösung. Der Ansatz wurde dann 72 Stunden gerührt und gegen Ende nochmals je 1 Stunde auf 40 °C und 45 °C erhitzt. Nach Abkühlen wurde der Reaktionsfeststoff abfiltriert, mit Wasser gewaschen und im Vakuumtrockenschrank getrocknet.

Man erhielt ein homogenes Pulver und Anbackungen und Koagulat von < 2% im Reaktor.

### Beispiel E4

60.0 g TAA-ol-MA, 8.0 g 15 %-ige wässrige Natriumlaurylsulfatlösung, 0.3 g Thioglycolsäure-2-ethylhexylester und 0.6 g Triethylenglycoldimethacrylat wurden in einem 1 I Doppelmantelreaktor mit Rührer und Kühler in 240 ml Wasser gegeben und auf 65°C erhitzt. Nachdem das TAA-ol-MA geschmolzen war, wurde 15 min bei 6000 Upm mit einem Ultra Turrax dispergiert. Anschließend wurde unter Ultra Turrax Scherung langsam über 30 Minuten abgekühlt. Bei 40 °C wurden dann zur Polymerisierung 0.06 g Ammoniumperoxodisulfat zugesetzt und über 2 Stunden reagiert. Anschließend wurde über Nacht bei 45°C weiter reagiert und dann über 1 h bei 65°C die Polymerisierung vervollständigt. Nach Abkühlen auf Raumtemperatur wurde dann die Reaktionslösung auf das halbe Volumen eingeengt und die Partikel durch Zugabe von 240 ml Methanol gequollen. Anschließend erfolgte die Zugabe von 2.6 g Natriumwolframatdihydrat und 0.7 g EDTA zur Oxidationskatalyse. Die Oxidation erfolgte dann durch portionsweisen Zusatz von 3 mal 9 g 30 %ige wässrige Wasserstoffperoxidlösung im halbstündigen Rhythmus und nach weiteren 1.5 Stunden einer weiteren Zugabe von 26.8 g Wasserstoffperoxidlösung. Der Ansatz wurde dann 72 Stunden gerührt und gegen Ende nochmals je 1 Stunde auf 40 °C und 45 °C erhitzt. Nach Abkühlen wurde der Reaktionsfeststoff abfiltriert, mit Wasser gewaschen und im Vakuumtrockenschrank getrocknet.

Auch in diesem Fall erhielt man schließlich ein homogenes Pulver und Anbackungen und Koagulat von < 2% im Reaktor.

### Beispiel E5

60.0 g TAA-ol-MA, 4.0 g 15 %-ige wässrige Natriumlaurylsulfatlösung, 4.0 g 15 %-ige wässrige TEGO SMO 80V-Lösung, 0.3 g Thioglycolsäure-2-ethylhexylester und 0.6 g Triethylenglycoldimethacrylat wurden in einem 1 I Doppelmantelreaktor mit Rührer und Kühler in 240 ml Wasser gegeben und auf 65 °C erhitzt. Nachdem das TAA-ol-MA geschmolzen war, wurde 15 min bei 6000 Upm mit einem Ultra Turrax dispergiert. Anschließend wurde unter Ultra Turrax Scherung langsam über 30 Minuten abgekühlt. Bei 40 °C wurden dann zur Polymerisierung 0.06 g Ammoniumperoxodisulfat zugesetzt und über 2 Stunden reagiert. Anschließend wurde über Nacht bei 45 °C weiter reagiert und dann über 1 h bei 65 °C die Polymerisierung vervollständigt. Nach Abkühlen auf Raumtemperatur wurde dann die Reaktionslösung auf das halbe Volumen eingeengt und die Partikel durch Zugabe von 240 ml Methanol gequollen. Anschließend erfolgte die Zugabe von 2.6 g Natriumwolframatdihydrat und 0.7 g EDTA zur Oxidationskatalyse. Die Oxidation erfolgte dann durch portionsweisen Zusatz von 3 mal 9 g 30 %-ige wässrige Wasserstoffperoxidlösung im halbstündigen Rhythmus und nach weiteren 1.5 Stunden einer weiteren Zugabe von 26.8 g Wasserstoffperoxidlösung. Der Ansatz wurde dann 72 Stunden gerührt und gegen Ende nochmals je 1 Stunde auf 40 °C und 45 °C erhitzt. Nach Abkühlen wurde der Reaktionsfeststoff abfiltriert, mit Wasser gewaschen und im Vakuumtrockenschrank getrocknet.

Man erhielt ein homogenes Pulver und Anbackungen und Koagulat von < 2% im Reaktor.

### Beispiel E6

2.3 g Graphen Nanoplatelets (XG Sciences xGnP C 500) und 0.25 g Multi-Wall Carbon Nanotubes MWCNT (Nanocyl NC7000), 6.0 g 15 %-ige wässrige Natriumlaurylsulfatlösung, wurden in einem 1 I Doppelmantelreaktor mit Rührer und Kühler in 240 ml Wasser gegeben und 15 min bei 6000 Upm (kurzzeitig auch mal 12000 Upm) mit einem Ultra Turrax dispergiert. Anschließend wurden weitere 6.0 g wässrige Natriumlaurylsulfatlösung, 45.0 g TAA-ol-MA, 0.225 g Thioglycolsäure-2-ethylhexylester und 0.45 g Triethylenglycoldimethacrylat zugegeben und auf 65 °C weiter unter starker Scherung erhitzt. Nachdem das TAA-ol-MA geschmolzen war, wurde der Ansatz für weitere 15 min mit dem Ultra Turrax dispergiert bevor unter Ultra Turrax Scherung langsam über 30 Minuten abgekühlt wird. Bei 40°C werden dann zur Polymerisierung 0.45 g Ammoniumperoxodisulfat zugesetzt und über 2 Stunden reagiert. Anschließend wurde über Nacht bei 45°C weiter reagiert und dann über 1 h bei 65°C die Polymerisierung vervollständigt. Während der Abkühlphase auf Raumtemperatur wurde 30 Minuten Druckluft durch den Ansatz geleitet und auf ein Viertel des Volumens eingeengt. Die Partikel wurden dann durch Zugabe von 90 ml Methanol gequollen. Anschließend erfolgte die Zugabe von 2 g Natriumwolframatdihydrat und 0.5 g EDTA zur Oxidationskatalyse. Die Oxidation erfolgte dann durch portionsweisen Zusatz von 3 mal 6.8 g 30 %-ige wässrige Wasserstoffperoxidlösung im halbstündigen Rhythmus und nach weiteren 1.5 Stunden einer weiteren Zugabe von 20.4 g Wasserstoffperoxidlösung. Der Ansatz wurde über Nacht gerührt und dann nach erneuter Zugabe von 20.4 g Wasserstoffperoxid weitere 72 Stunden gerührt. Am Ende wurde der Ansatz nochmals je 1 Stunde auf 40 °C und 45 °C erhitzt. Nach Abkühlen wurde der Reaktionsfeststoff abfiltriert, mit Wasser gewaschen und im Vakuumtrockenschrank getrocknet.

Man erhielt ein homogenes Pulver und Anbackungen und Koagulat von < 3% im Reaktor.

## Patentansprüche

1. Verfahren zur Polymerisierung einer Verbindung der Strukturformel **(I)** mit 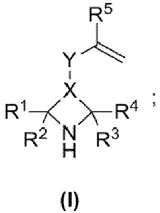
wobei R¹, R², R³, R⁴, R⁵ ausgewählt sind aus der Gruppe bestehend aus Wasserstoff, verzweigte oder unverzweigte Alkylgruppe mit 1 bis 4 Kohlenstoffatomen,
X ausgewählt ist aus der Gruppe bestehend aus *-CH₂-**C**'H-CH₂-**,*-**C**'H-CH₂-**, *-**C**'=CH-**,
wobei "*" jeweils die Bindung zu dem mit R¹ und R² verknüpften Kohlenstoffatom bezeichnet,
wobei "**" jeweils die Bindung zu dem mit R³ und R⁴ verknüpften Kohlenstoffatom bezeichnet,
wobei "**C'**" ein Kohlenstoffatom bezeichnet, dass zusätzlich mit dem Rest Y verknüpft ist,
wobei Y ausgewählt aus den verbrückenden Resten **(II)** und **(III)** ist,
wobei **(II)** die Struktur &-(Y¹)ₚ₁-[C=X¹]ₚ₂-(Y²)ₚ₃-B-(Y³)ₚ₆-[C=X²]ₚ₅-(Y⁴)ₚ₄-&& aufweist,
und wobei **(III)** die Struktur &-(Y⁵)ₚ₉-(C=X³)ₚ₈-(Y⁶)ₚ₇-&& aufweist,
wobei in den verbrückenden Resten **(II)** und **(III)**
p1, p2, p3 jeweils 0 oder 1 mit der Maßgabe, dass nicht gleichzeitig p1 = p3 = 1 und p2 = 0 ist, sind,
p4, p5, p6 jeweils 0 oder 1 mit der Maßgabe, dass nicht gleichzeitig p4 = p6 = 1 und p5 = 0 ist, sind,
p7, p8, p9 jeweils 0 oder 1 mit der Maßgabe, dass nicht gleichzeitig p7 = p9 = 1 und p8 = 0 ist, sind,
X¹, X², X³ unabhängig voneinander ausgewählt aus der Gruppe bestehend aus Sauerstoff, Schwefel sind,
Y¹, Y², Y³, Y⁴, Y⁵, Y⁶ unabhängig voneinander ausgewählt aus der Gruppe bestehend aus O, S, NH, N-Alkyl sind,
B ein zweiwertiger (hetero)aromatischer Rest oder ein zweiwertiger, gegebenenfalls mit mindestens einer Gruppe ausgewählt aus Nitrogruppe, -NH₂, -CN, -SH, -OH, Halogen substituierter und gegebenenfalls mindestens eine Gruppe ausgewählt aus Ether, Thioether,
Aminoether, Carbonylgruppe, Carbonsäureestergruppe, Carbonsäureamidgruppe, Sulfonsäureestergruppe, Phosphorsäureester aufweisender aliphatischer Rest ist,
und wobei "&&" für Y die Bindung bezeichnet, über die Y mit X verknüpft ist und wobei "&" für Y die Bindung bezeichnet, über die Y mit dem Kohlenstoffatom, welches mit R⁵ verknüpft ist, verknüpft ist,
umfassend die aufeinander folgenden Schritte
(a) Erzeugen einer Dispersion **D** fester Partikel der Verbindung der Strukturformel **(I)** in einer wässrigen Phase,
(b) Polymerisierung der festen Partikel der Verbindung der Strukturformel **(I)** der in Schritt (a) erzeugten Dispersion **D,** wodurch ein Polymer **P¹** umfassend Wiederholungseinheiten der Strukturformel **(VI)** mit 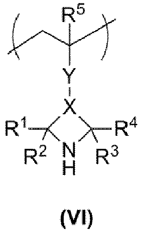 erhalten wird,
**dadurch gekennzeichnet,**
**dass** die Polymerisierung in Schritt b) bei einer Temperatur, die unterhalb der Schmelztemperatur der eingesetzten Verbindung der Strukturformel **(I)** liegt, durchgeführt wird.

2. Verfahren nach Anspruch 1, wobei die Anzahl der Wiederholungseinheiten **(VI)** im Polymer **P¹** 4 bis 1 Million beträgt.

3. Verfahren nach Anspruch 1 oder 2, wobei als Verbindung der Strukturformel **(I)** eine der folgenden Verbindungen der Strukturformel **(IV), (IV)', (IV)"** eingesetzt wird: 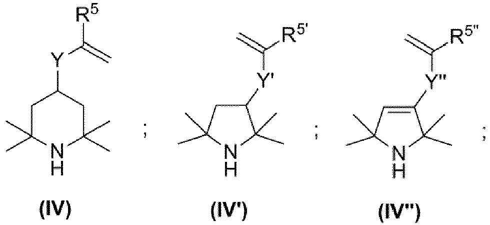
wobei in den Strukturformeln **(IV), (IV)', (IV)"** die Reste R⁵, R^{5'}, R^{5"} unabhängig voneinander jeweils Methyl oder Wasserstoff sind,
und wobei in den Strukturformeln **(IV), (IV)', (IV)"** die Reste Y, Y', Y" unabhängig voneinander ausgewählt aus den verbrückenden Resten **(II)** und **(III)** mit den in Anspruch 1 angegebenen Bedeutungen sind.

4. Verfahren nach einem der Ansprüche 1 bis 3, wobei als Verbindung der Strukturformel **(I)** eine Verbindung der Strukturformel **(IV)** eingesetzt wird.

5. Verfahren nach Anspruch 4, wobei es sich bei der Verbindung der Strukturformel **(I)** um die Struktur **(V)** mit 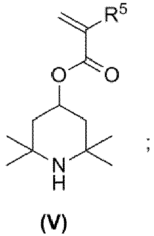 wobei R⁵ = H oder Methyl, handelt.

6. Verfahren nach einem der Ansprüche 1 bis 5, wobei der Anteil von Wasser in der wässrigen Phase > 50.0 Gew.-%, bezogen auf das Gesamtgewicht der wässrigen Phase, beträgt.

7. Verfahren nach einem der Ansprüche 1 bis 6, wobei man die Dispersion **D** in Schritt (a) dadurch erzeugt, dass man eine Mischung der Verbindung der Strukturformel **(I)** und der wässrigen Phase bei einer Temperatur **T_{A1}** dispergiert, wobei **T_{A1}** > **T_{SMI}**, wobei **T_{SMI}** die Schmelztemperatur der eingesetzten Verbindung der Strukturformel **(I)** ist, und nach der Dispergierung die Temperatur von **T_{A1}** auf **T_{A2},** wobei **T_{A2}** < **T_{SMI}**, absenkt.

8. Verfahren nach einem der Ansprüche 1 bis 7, wobei mindestens 50 % der festen Partikel der eingesetzten Verbindung der Strukturformel **(I)** in der Dispersion **D** eine Korngröße von ≤ 800 µm, mit dem in DIN 66156-2 beschriebenen Verfahren bestimmt, wobei Siebe gemäß DIN ISO 3310 eingesetzt werden, aufweisen.

9. Verfahren nach Anspruch 8, wobei dabei gleichzeitig mindestens 80 % der festen Partikel der eingesetzten Verbindung der Strukturformel **(I)** in der Dispersion, die eine Korngröße von ≤ 800 µm aufweisen, eine Korngröße, die zwischen 32 und 400 µm liegt, aufweisen.

10. Verfahren nach einem der Ansprüche 1 bis 9, wobei die wässrige Phase in der Dispersion **D** mindestens ein Bestandteil ausgewählt aus Vernetzer, Tenside, Regler enthält.

11. Verfahren nach einem der Ansprüche 1 bis 10, wobei die wässrige Phase in der Dispersion **D** keine organischen Lösungsmittel aufweist.

12. Verfahren nach einem der Ansprüche 1 bis 11, wobei die Polymerisierung in Schritt b) bei einer Temperatur, die 1 °C oder mehr unterhalb der Schmelztemperatur der eingesetzten Verbindung der Strukturformel **(I)** liegt, durchgeführt wird.

13. Verfahren nach einem der Ansprüche 1 bis 12, wobei die Polymerisierung in Schritt b) eine radikalische ist.

14. Verfahren nach einem der Ansprüche 1 bis 13, wobei der Polymerisierungsinitiator, der in Schritt (a) erhaltenen Dispersion **D** nach Absinken der Temperatur der in Schritt (a) erhaltenen Dispersion **D** unter den Schmelzpunkt der eingesetzten Verbindung der Strukturformel **(I)** zugesetzt wird.

15. Verfahren nach einem der Ansprüche 1 bis 14, wobei in Schritt b) die Temperatur der Dispersion **D** unterhalb der Schmelztemperatur der eingesetzten Verbindung der Strukturformel **(I)** liegt, bis mindestens 30 % der in Schritt (a) des erfindungsgemäßen Verfahrens eingesetzten Verbindung der Strukturformel **(I)** abreagiert sind.

16. Verfahren nach einem der Ansprüche 1 bis 15, wobei das in Schritt (b) erhaltene Polymer **P¹** im Anschluss an Schritt (b) einer Nitroxidierung unterzogen, wodurch ein Polymer **P²** umfassend Wiederholungseinheiten der Strukturformel **(VII)** mit 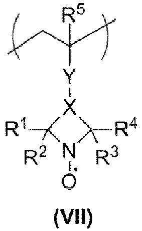 erhalten wird.

17. Verwendung des Polymers **P²** nach Anspruch 16 als redoxaktives Elektrodenmaterial für elektrische Ladungsspeicher.

18. Verwendung des Polymers **P²** nach Anspruch 16 in einem Elektrodenslurry für elektrische Ladungsspeicher.

## Claims

1. Process for polymerizing a compound of the structural formula **(I)** 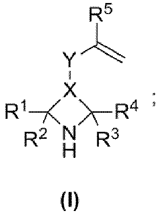
where R¹, R², R³, R⁴, R⁵ are selected from the group consisting of hydrogen, branched or unbranched alkyl group having 1 to 4 carbon atoms,
X is selected from the group consisting of *-CH₂-**C**'H-CH₂-**,*-**C'**H-CH₂-**, *-**C**'=CH-**,
where "*" in each case denotes the bond to the carbon atom bonded to R¹ and R²,
where "**" in each case denotes the bond to the carbon atom bonded to R³ and R⁴,
where **"C'"** denotes a carbon atom additionally bonded to the Y radical,
where Y is selected from the bridging radicals **(II)** and **(III),**
where **(II)** has the structure &-(Y¹)ₚ₁-[C=X¹]ₚ₂-(Y²)ₚ₃-B-(Y³)ₚ₆-[C=X²]ₚ₅-(Y⁴)ₚ₄-&&,
and where **(III)** has the structure &-(Y⁵)ₚ₉-(C=X³)ₚ₈-(Y⁶)ₚ₇-&&,
where, in the bridging radicals **(II)** and **(III),** p1, p2, p3 are each 0 or 1, with the proviso that it is not simultaneously the case that p1 = p3 = 1 and p2 = 0,
p4, p5, p6 are each 0 or 1, with the proviso that it is not simultaneously the case that p4 = p6 = 1 and p5 = 0,
p7, p8, p9 are each 0 or 1, with the proviso that it is not simultaneously the case that p7 = p9 = 1 and p8 = 0,
X¹, X², X³ are independently selected from the group consisting of oxygen, sulphur,
Y¹, Y², Y³, Y⁴, Y⁵, Y⁶ are independently selected from the group consisting of O, S, NH, N-alkyl,
B is a divalent (hetero)aromatic radical or a divalent aliphatic radical optionally substituted by at least one group selected from nitro group, -NH₂, -CN, -SH, -OH, halogen, and optionally having at least one group selected from ether, thioether, amino ether, carbonyl group, carboxylic ester group, carboxamide group, sulphonic ester group, phosphoric ester,
and where "&&" for Y denotes the bond via which Y is joined to X and where "&" for Y denotes the bond via which Y is joined to the carbon atom joined to R⁵,
comprising the following successive steps:
(a) producing a dispersion **D** of solid particles of the compound of the structural formula **(I)** in an aqueous phase,
(b) polymerizing the solid particles of the compound of the structural formula **(I)** of the dispersion **D** obtained in step (a), giving a polymer **P¹** comprising repeat units of the structural formula **(VI)** 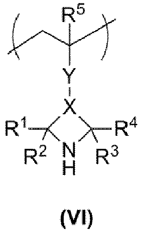
**characterized in that**
the polymerization in step b) is conducted at a temperature below the melting temperature of the compound of the structural formula **(I)** used.

2. Process according to Claim 1, wherein the number of repeat units **(VI)** in the polymer **P¹** is 4 to 1 million.

3. Process according to Claim 1 or 2, wherein the compound of the structural formula **(I)** used is one of the following compounds of the structural formulae **(IV), (IV)', (IV)":** 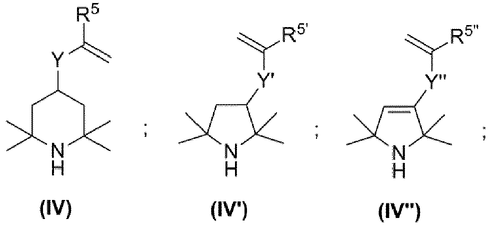
where, in the structural formulae **(IV), (IV)', (IV)",** the R⁵, R^{5'}, R^{5"} radicals are each independently methyl or hydrogen,
and where, in the structural formulae **(IV), (IV)', (IV)",** the Y, Y', Y" radicals are independently selected from the bridging radicals **(II)** and **(III)** with the definitions given in Claim 1.

4. Process according to any of Claims 1 to 3, wherein the compound of the structural formula **(I)** used is a compound of the structural formula **(IV).**

5. Process according to Claim 4, wherein the compound of the structural formula **(I)** is the structure **(V)** 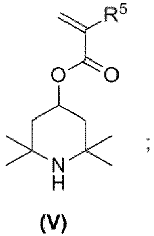 where R⁵ = H or methyl.

6. Process according to any of Claims 1 to 5, wherein the proportion of water in the aqueous phase is > 50.0% by weight, based on the total weight of the aqueous phase.

7. Process according to any of Claims 1 to 6, wherein the dispersion **D** is produced in step (a) by dispersing a mixture of the compound of the structural formula **(I)** and the aqueous phase at a temperature **T_{A1},** where **T_{A1}** > **T_{SMI}**, where **T_{SMI}** is the melting temperature of the compound of the structural formula **(I)** used, and, after the dispersion, the temperature is lowered from **T_{A1}** to **T_{A2},** where **T_{A2}** < **T_{SMI}.**

8. Process according to any of Claims 1 to 7, wherein at least 50% of the solid particles of the compound of the structural formula **(I)** used in the dispersion **D** have a particle size of ≤ 800 µm, determined by the method described in DIN 66156-2, using sieves according to DIN ISO 3310.

9. Process according to Claim 8, wherein, at the same time, at least 80% of the solid particles of the compound of the structural formula **(I)** used in the dispersion that have a particle size of ≤ 800 µm have a particle size between 32 and 400 µm.

10. Process according to any of Claims 1 to 9, wherein the aqueous phase in the dispersion **D** comprises at least one constituent selected from crosslinkers, surfactants, chain transfer agents.

11. Process according to any of Claims 1 to 10, wherein the aqueous phase in the dispersion **D** does not include any organic solvents.

12. Process according to any of Claims 1 to 11, wherein the polymerization in step b) is conducted at a temperature 1°C or more below the melting temperature of the compound of the structural formula **(I)** used.

13. Process according to any of Claims 1 to 12, wherein the polymerization in step b) is a free-radical polymerization.

14. Process according to any of Claims 1 to 13, wherein the polymerization initiator is added to the dispersion **D** obtained in step (a) after the temperature of the dispersion **D** obtained in step (a) has dropped below the melting point of the compound of the structural formula **(I)** used.

15. Process according to any of Claims 1 to 14, wherein the temperature of the dispersion **D** in step b) is below the melting temperature of the compound of the structural formula **(I)** used until at least 30% of the compound of the structural formula **(I)** used has reacted in step (a) of the process according to the invention.

16. Process according to any of Claims 1 to 15, wherein the polymer **P¹** obtained in step (b), after step (b), is subjected to a nitroxidation, giving a polymer **P²** comprising repeat units of the structural formula **(VII)**

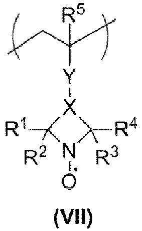

17. Use of the polymer **P²** according to Claim 16 as a redox-active electrode material for electrical charge storage means.

18. Use of the polymer **P²** according to Claim 16 in an electrode slurry for electrical charge storage means.

## Revendications

1. Procédé pour la polymérisation d'un composé de formule développée (I) 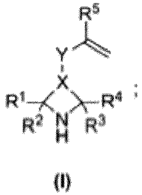
dans laquelle R¹, R², R³, R⁴, R⁵ sont choisis dans le groupe constitué par hydrogène, groupe alkyle ramifié ou non ramifié comprenant 1 à 4 atomes de carbone,
X est choisi dans le groupe constitué par *-CH₂-C'H-CH₂-**, *-C'H-CH₂-**, *-C'=CH-**,
"*" désignant à chaque fois la liaison à l'atome de carbone lié à R¹ et R²,
"**" désignant à chaque fois la liaison à l'atome de carbone lié à R³ et R⁴,
"C'" désignant un atome de carbone qui est en outre lié au radical Y,
Y est choisi parmi les radicaux formant un pont (II) et (III),
(II) présentant la structure &-(Y¹)ₚ₁[C=X¹]ₚ₂-(Y²)ₚ₃-B-(Y³)ₚ₆-[C=X²]ₚ₅-(Y⁴)ₚ₄-&&,
et (III) présentant la structure &-(Y⁵)ₚ₉-(C=X³)ₚ₈-(Y⁶)ₚ₇-&&,
où, dans les radicaux formant un pont (II) et (III)
p1, p2, p3 valent à chaque fois 0 ou 1 sous réserve que les conditions p1=p3=1 et p2=0 n'existent pas simultanément,
p4, p5, p6 valent à chaque fois 0 ou 1 sous réserve que les conditions p4=p6=1 et p5=0 n'existent pas simultanément,
p7, p8, p9 valent à chaque fois 0 ou 1 sous réserve que les conditions p7=p9=1 et p8=0 n'existent pas simultanément,
X¹, X², X³, indépendamment les uns des autres, sont choisis dans le groupe constitué par oxygène, soufre,
Y¹, Y², Y³, Y⁴, Y⁵, Y⁶, indépendamment les uns des autres, sont choisis dans le groupe constitué par O, S, NH, N-alkyle,
B représente un radical (hétéro)aromatique bivalent ou un radical aliphatique bivalent le cas échéant substitué par au moins un groupe choisi parmi le groupe nitro, -NH₂, -CN, -SH, -OH, halogène et présentant le cas échéant au moins un groupe choisi parmi éther, thioéther, aminoéther, groupe carbonyle, groupe ester d'acide carboxylique, groupe amide d'acide carboxylique, groupe ester d'acide sulfonique, ester d'acide phosphorique,
et "&&" pour Y désignant la liaison via laquelle Y est lié à X et "&" pour Y désignant la liaison via laquelle Y est lié à l'atome de carbone qui est lié à R⁵,
comprenant les étapes suivantes successives
(a) formation d'une dispersion D de particules solides du composé de formule développée (I) dans une phase aqueuse
(b) polymérisation des particules solides du composé de formule développée (I) de la dispersion D formée dans l'étape (a), suite à quoi un polymère P¹ comprenant des motifs récurrents de formule développée (VI) est obtenu 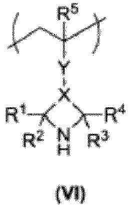
**caractérisé en ce que** la polymérisation dans l'étape b) est effectuée à une température qui est inférieure à la température de fusion du composé de formule développée (I) utilisé.

2. Procédé selon la revendication 1,
le nombre de motifs récurrents (VI) dans le polymère P¹ étant de 4 à 1 million.

3. Procédé selon la revendication 1 ou 2,
un des composés suivants de formule développée (IV), (IV)', (IV)" étant utilisé comme composé de formule développée (I) : 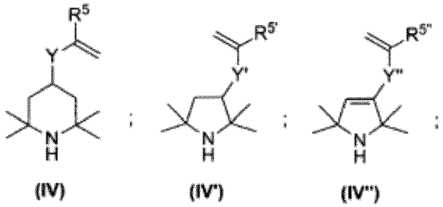
les radicaux R⁵, R^{5'}, R^{5"} dans les formules développées (IV), (IV)', (IV)" représentant, indépendamment les uns des autres, méthyle ou hydrogène,
les radicaux Y, Y', Y" dans les formules développées (IV), (IV)', (IV)" étant choisis, indépendamment les uns des autres, parmi les radicaux formant un pont (II) et (III) présentant les significations indiquées dans la revendication 1.

4. Procédé selon l'une quelconque des revendications 1 à 3,
un composé de formule développée (IV) étant utilisé comme composé de formule développée (I).

5. Procédé selon la revendication 4,
le composé de formule développée (I) étant la structure (V) 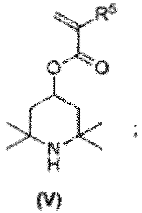 dans laquelle R⁵ = H ou méthyle.

6. Procédé selon l'une quelconque des revendications 1 à 5,
la proportion d'eau dans la phase aqueuse étant > 50,0% en poids, par rapport au poids total de la phase aqueuse.

7. Procédé selon l'une quelconque des revendications 1 à 6,
la dispersion D dans l'étape (a) étant formée en ce qu'on disperse un mélange du composé de formule développée (I) et de la phase aqueuse à une température T_{A1'} où T_{A1} > T_{SMI}, T_{SMI} étant la température de fusion du composé utilisé de formule développée (I) et on abaisse, après la dispersion, la température de T_{A1} à T_{A2}, où T_{A2} < T_{SMI}.

8. Procédé selon l'une quelconque des revendications 1 à 7,
au moins 50% des particules solides du composé utilisé de formule développée (I) dans la dispersion D présentant une grosseur de particule ≤ 800 µm, déterminée par le procédé décrit dans la norme DIN 66156-2, des tamis selon la norme DIN ISO 3310 étant utilisés.

9. Procédé selon la revendication 8,
au moins 80% des particules solides du composé utilisé de formule développée (I) dans la dispersion, qui présentent une grosseur de particule ≤ 800 µm, présentant simultanément une grosseur de particule qui est située entre 32 et 400 µm.

10. Procédé selon l'une quelconque des revendications 1 à 9,
la phase aqueuse dans la dispersion D contenant au moins un constituant choisi parmi les réticulants, les tensioactifs, les agents de régulation.

11. Procédé selon l'une quelconque des revendications 1 à 10,
la phase aqueuse dans la dispersion D ne présentant pas de solvant organique.

12. Procédé selon l'une quelconque des revendications 1 à 11,
la polymérisation dans l'étape b) étant effectuée à une température qui est inférieure de 1°C ou plus à la température de fusion du composé de formule développée (I) utilisé.

13. Procédé selon l'une quelconque des revendications 1 à 12,
la polymérisation dans l'étape b) étant une polymérisation par voie radicalaire.

14. Procédé selon l'une quelconque des revendications 1 à 13,
l'initiateur de polymérisation étant ajouté à la dispersion D obtenue dans l'étape (a) après abaissement de la température de la dispersion D obtenue dans l'étape (a) sous le point de fusion du composé de formule développée (I) utilisé.

15. Procédé selon l'une quelconque des revendications 1 à 14,
la température de la dispersion D dans l'étape b) étant située sous la température de fusion du composé de formule développée (I) utilisé jusqu'à ce qu'au moins 30% du composé de formule développée (I) utilisé dans l'étape (a) du procédé selon l'invention aient réagi.

16. Procédé selon l'une quelconque des revendications 1 à 15,
le polymère P¹ obtenu dans l'étape (b) étant soumis, après l'étape (b), à une nitroxydation, suite à quoi un polymère P² comprenant des motifs récurrents de formule de structure (VII) est obtenu

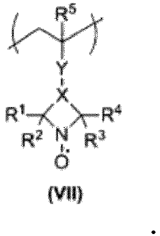

17. Utilisation du polymère P² selon la revendication 16 comme matériau d'électrode actif en redox pour des accumulateurs de charges électriques.

18. Utilisation du polymère P² selon la revendication 16 dans une suspension d'électrode pour des accumulateurs de charges électriques.
